(19) Europäisches Patentamt
European Patent Office
Office européen des brevets

(11) EP 2 683 056 A1

(12) EUROPEAN PATENT APPLICATION
published in accordance with Art. 153(4) EPC

(43) Date of publication:
08.01.2014 Bulletin 2014/02

(51) Int Cl.:
H02J 7/35 (2006.01)　　　H01M 10/44 (2006.01)

(21) Application number: 12751800.9

(22) Date of filing: 13.02.2012

(86) International application number:
PCT/JP2012/053278

(87) International publication number:
WO 2012/117838 (07.09.2012 Gazette 2012/36)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 02.03.2011　JP 2011044731

(71) Applicant: Sony Corporation
Tokyo 108-0075 (JP)

(72) Inventor: OGURA, Eiji
Tokyo 108-0075 (JP)

(74) Representative: Müller - Hoffmann & Partner
Patentanwälte
Innere Wiener Strasse 17
81667 München (DE)

(54) CHARGER, CHARGING SYSTEM, AND CHARGING METHOD

(57) A completion time setting section sets a completion time that is a time at which charging of a secondary battery is completed. An output current measurement section acquires an output value of a current from a natural energy power supply apparatus. A power amount measurement section acquires an amount of power that is supplied until the charging of the secondary battery is completed. A predicted time calculation section calculates a time at which the charging of the second battery is completed by only the natural energy power based on the output value and the power amount as a predicted time. A control section causes the secondary battery to be charged with only the natural energy power when the predicted time is earlier than the completion time.

**FIG. 2**

EP 2 683 056 A1

**Description**

Technical Field

The present technology relates to a charger, a charging system, and a charging method. More particularly, the present technology relates to a charger, a charging system, and a charging method using power generated by natural energy.

Background Art

Recently, effectively utilizing power (hereinafter referred to as "natural energy power") generated by natural energy such as sunlight, wind power, water power, or ground heat has become important in a point of view of environmental protection. The natural energy is also referred to as green energy or renewable energy. Because an amount of power generation of natural energy power usually depends upon the weather, a power transmission scheme using stably supplied commercial power regardless of the weather in combination with natural energy power is commonly used in power transmission.

For example, a charging apparatus that performs charging by commercial power until a remaining capacity of a secondary battery reaches a constant amount when the secondary battery is charged, and performs charging by a solar battery after the remaining capacity reaches the constant amount has been proposed (see Patent Literature 1). This charging apparatus estimates the remaining capacity from a battery voltage or a charging time in charging control. Specifically, the charging apparatus continues charging by the commercial power by determining that the remaining capacity does not reach the constant amount when the battery voltage is less than a threshold value or when a time for charging by commercial power is less than a predetermined time.

Citation List

Patent Literature

Patent Literature 1: JP 11-113189A

Summary of Invention

Technical Problem

However, the natural energy power is not effectively used in the above-described related art. For example, even when there is ample time until the time charging should be completed, the charging apparatus performs the charging by commercial power as long as the remaining capacity does not reach the constant amount. In the charging apparatus described above, there is a problem in that natural energy power generated by power generation is useless if unused in charging of the secondary battery within a period until the remaining capacity reaches the constant amount.

The present technology has been made in view of the above-described circumstances, and an object of the present technology is to provide a charger that effectively uses natural energy power when there is ample time until the time charging should be completed.

Solution to Problem

According to the first aspect of the present invention in order to achieve the above-mentioned object, there is provided a charger including: a setting section for setting a completion time that is a time at which charging of a secondary battery is completed; an output value acquisition section for acquiring an output value of a voltage or a current from a natural energy power supply apparatus, which is a power supply apparatus that generates natural energy power from natural energy; a power amount acquisition section for acquiring an amount of power that is supplied until the charging of the secondary battery is completed; a predicted time calculation section for calculating a time at which the charging of the second battery is completed by only the natural energy power based on the output value and the power amount as a predicted time; and a control section for causing the secondary battery to be charged with only the natural energy power when the predicted time is earlier than the completion time, and a charging method using the charger. Thereby, there is also provided a function of causing the secondary battery to be charged with only the natural energy power when the predicted time is earlier than the completion time.

According to the first aspect of the present invention, the control section may cause the secondary battery to be charged with power generated by a power supply apparatus other than the natural energy power supply apparatus when the predicted time is the completion time or later. Thereby, there is also provided a function of causing the secondary battery to be charged with the power generated by the power supply apparatus other than the natural energy power supply apparatus when the predicted time is the completion time or later.

According to the first aspect of the present invention, the control section may cause the secondary battery to be charged by further supplying the natural energy power when the predicted time is the completion time or later. Thereby, there is also provided a function of further supplying the natural energy power to the secondary battery when the predicted time is the completion time or later.

According to the first aspect of the present invention, the charger may further include a charging data generation section for generating and outputting information indicating a charging capacity of the secondary battery by the natural energy power and a charging capacity of the secondary battery by power other than the natural energy power as charging data. Thereby, there is also provided a function of outputting the charging data indicating the charging capacity of the secondary battery by the natural energy power and the charging capacity of the secondary battery by the power other than the natural energy power.

According to the first aspect of the present invention, the power supply apparatus other than the natural energy power supply apparatus may receive alternating current (AC) power in which a power supply identification signal for identifying a supply source of power is superimposed on an AC waveform, the charger may further include a separation section for separating the power supply identification signal from the AC waveform, and the charging data generation section may generate the charging data based on the separated power supply identification signal. Thereby, there is also provided a function of generating the charging data based on the power supply identification signal.

According to the first aspect of the present invention, the control section may cause the secondary battery to be charged with only the natural energy power when a remaining time, which is a time from a current time to the completion time, is greater than or equal to a predetermined time. Thereby, there is also provided a function of causing the secondary battery to be charged with only the natural energy power when the remaining time is greater than or equal to the predetermined time.

According to the first aspect of the present invention, the control section may cause the secondary battery to be charged with only the natural energy power when a remaining capacity of the secondary battery is greater than or equal to a predetermined capacity. Thereby, there is also provided a function of causing the secondary battery to be charged with only the natural energy power when the remaining capacity is greater than or equal to the predetermined capacity.

In addition, according to the first aspect, the setting section may further set weather forecast data indicating forecast weather, the output value acquisition section may include a predicted value storage section for storing a predicted value for the output value for each weather and a predicted value acquisition section for reading the predicted value corresponding to the weather indicated by the weather forecast data from the predicted value storage section, and the predicted value calculation section may calculate the predicted time based on the read predicted value and the power amount. Thereby, there is also provided a function of calculating the predicted time based on the predicted value corresponding to the forecast weather and the power amount.

According to the second aspect of the present invention in order to achieve the above-mentioned object, there is provided a charging system including: a charger; and a battery pack, wherein the charger includes: a setting section for setting a completion time that is a time at which charging of a secondary battery is completed; an output value acquisition section for acquiring an output value of a voltage or a current from a natural energy power supply apparatus, which is a power supply apparatus that generates natural energy power from natural energy; a power amount acquisition section for acquiring an amount of power that is supplied until the charging of the secondary battery is completed; a predicted time calculation section for calculating a time at which the charging of the second battery is completed by only the natural energy power based on the output value and the power amount as a predicted time; a control section for causing the secondary battery to be charged with only the natural energy power when the predicted time is earlier than the completion time and causing the secondary battery to be charged with power generated by a power supply apparatus other than the natural energy power supply apparatus when the predicted time is the completion time or later; and a charging data generation section for generating and outputting information indicating a charging capacity of the secondary battery by the natural energy power and a charging capacity of the secondary battery by power other than the natural energy power as charging data, and wherein the battery pack includes: a charging data storage section for storing the output charging data; and the secondary battery. Thereby, there is also a function of causing the secondary battery to be charged with only the natural energy power when the predicted time is earlier than the completion time and storing the charging data indicating the charging capacity of the secondary battery by the natural energy power and the charging capacity of the secondary battery by the power other than the natural energy power.

According to the second aspect of the present invention, the power supply apparatus other than the natural energy power supply apparatus may receive AC power in which a power supply identification signal for identifying a supply source of power is superimposed on an AC waveform, the charger may further include a separation section for separating the power supply identification signal from the AC waveform, and the charging data generation section may generate the charging data based on the separated power supply identification signal. Thereby, there is also provided a function of generating the charging data based on the power supply identification signal.

According to the second aspect of the present invention, the charging system may further include a display section for displaying the charging capacity of the secondary battery by the natural energy power and the charging capacity of the secondary battery by the power other than the natural energy power based on the charging data. Thereby, there is also provided a function of displaying the charging capacity of the secondary battery by the natural energy power and the charging capacity of the secondary battery by the power other than the natural energy power in a table.

Advantageous Effects of Invention

According to the present technology, there is an excellent effect in that natural energy power is effectively used when there is ample time until the time charging should be completed.

Brief Description of Drawings

[Fig. 1] Fig. 1 is an overall diagram illustrating a configuration example of a charging system according to a first embodiment.
[Fig. 2] Fig. 2 is a block diagram illustrating a configuration example of a charging circuit according to the first embodiment.
[Fig. 3] Fig. 3 is a block diagram illustrating a configuration example of a power amount acquisition section according to the first embodiment.
[Fig. 4] Fig. 4 is a diagram illustrating a configuration example of a charging rate conversion table according to the first embodiment.
[Fig. 5] Fig. 5 is a table illustrating an example of an operation of a power transmission control section according to the first embodiment.
[Fig. 6] Fig. 6 is a flowchart illustrating an example of an operation of a charger according to the first embodiment.
[Fig. 7] Fig. 7 is a flowchart illustrating an example of a power transmission control process according to the first embodiment.
[Fig. 8] Fig. 8 is a block diagram illustrating a configuration example of a charging circuit according to a second embodiment.
[Fig. 9] Fig. 9 is a table illustrating an example of an operation of a power transmission control section according to the second embodiment
[Fig. 10] Fig. 10 is a flowchart illustrating an example of a power transmission control process according to the second embodiment.
[Fig. 11] Fig. 11 is a block diagram illustrating a configuration example of a charging circuit according to a third embodiment.
[Fig. 12A] Fig. 12A is a graph illustrating an example of a function representing characteristics of an output current according to the third embodiment.
[Fig. 12B] Fig. 12B is a graph illustrating an example of a function representing characteristics of an output current according to the third embodiment.
[Fig. 12C] Fig. 12C is a graph illustrating an example of a function representing characteristics of an output current according to the third embodiment.
[Fig. 13] Fig. 13 is a table illustrating an example of an operation of a charger according to the third embodiment.
[Fig. 14] Fig. 14 is a flowchart illustrating an example of a power transmission control process according to the third embodiment.
[Fig. 15] Fig. 15 is an overall diagram illustrating a configuration example of a charging system according to a fourth embodiment.
[Fig. 16] Fig. 16 is a block diagram illustrating a configuration example of a charging circuit according to the fourth embodiment.
[Fig. 17] Fig. 17 is a block diagram illustrating a configuration example of a metadata generation section according to the fourth embodiment.
[Fig. 18] Fig. 18 is a table illustrating an example of an operation of a metadata generation/update section according to the fourth embodiment.
[Fig. 19] Fig. 19 is a flowchart illustrating an example of an operation of a charger according to the fourth embodiment.
[Fig. 20] Fig. 20 is a diagram illustrating a configuration example of metadata according to the fourth embodiment.
[Fig. 21] Fig. 21 is a diagram illustrating a display example of content representing the metadata according to the fourth embodiment.

[Fig. 22] Fig. 22 is an overall diagram illustrating a configuration example of a charging system according to a fifth embodiment.

[Fig. 23] Fig. 23 is a block diagram illustrating a configuration example of a conversion switching section according to the fifth embodiment.

[Fig. 24] Fig. 24 is a block diagram illustrating a configuration example of a metadata generation section according to the fifth embodiment.

[Fig. 25] Fig. 25 is a table illustrating an example of an operation of a metadata generation/update section according to the fifth embodiment.

[Fig. 26] Fig. 26 is a diagram illustrating a configuration example of metadata according to a modified example of the fifth embodiment.

[Fig. 27] Fig. 27 is an overall diagram of a configuration example of a charging system according to a sixth embodiment.

[Fig. 28] Fig. 28 is a block diagram illustrating a configuration example of an electronic device control section according to the sixth embodiment.

[Fig. 29] Fig. 29 is a block diagram illustrating a configuration example of the charging circuit according to a modified example.

Description of Embodiments

Hereinafter, preferred embodiments of the present invention will be described in detail with reference to the appended drawings. Note that, in this specification and the drawings, elements that have substantially the same function and structure are denoted with the same reference signs, and repeated explanation is omitted.

Hereinafter, modes (hereinafter referred to as embodiments) for carrying out the present technology will be described. Description will be given in the following order.

1. First Embodiment (Charging Control: Example in which Completion Time Is Compared to Predicted Time)
2. Second Embodiment (Charging Control: Example in which Remaining Time and Remaining Battery Capacity Are Monitored)
3. Third Embodiment (Charging Control: Example in which Weather Forecast Data Is Used)
4. Fourth Embodiment (Charging Control: Example in which Metadata Is Generated)
5. Fifth Embodiment (Charging Control: Example in which Power Supply Identifier Is Acquired)
6. Sixth Embodiment (Charging Control: Example in which Charging Is Performed via Electronic Device)
7. Modified Example

<1. First Embodiment>

[Configuration Example of Charging System]

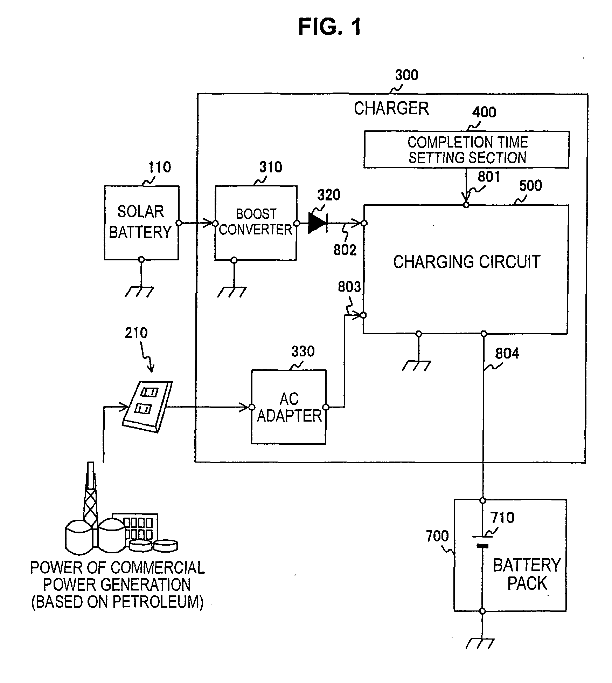

Fig. 1 is an overall diagram illustrating the configuration example of the charging system according to the first embodiment. The charging system includes a solar battery 110, a power outlet 210, a charger 300, and a battery pack 700. The battery pack 700 accommodates a battery in a housing, and includes a battery 710 as the battery. The battery 710 is a secondary battery that accumulates electricity charged by the charger 300. The charger 300 charges the battery 710, and includes a boost converter 310, a diode 320, an alternating current (AC) adapter 330, a completion time setting section 400, and a charging circuit 500.

The solar battery 110 generates natural energy power from solar energy. The solar battery 110 supplies the generated natural energy power to the boost converter 310. The power outlet 210 supplies AC power to the AC adapter 330. This AC power is commercial power generated from combustion energy of petroleum or the like, not natural energy power.

The boost converter 310 boosts a voltage of the DC power to a constant voltage. In detail, the boost converter 310 receives the natural energy power from the solar battery 110, converts its voltage into a constant voltage, and outputs the constant voltage to the diode 320. The converted voltage is set to a voltage that is higher than a battery voltage Vb of the battery 710. The diode 320 is an element for passing a current in only one direction. An anode of the diode 320 is connected to the boost converter 310, and a cathode is connected to the charging circuit 500. Thus, backflow of the current from the charging circuit 500 to the boost converter 310 is prevented. A direct current (DC) from the solar battery 110 is supplied to the charging circuit 500 via a signal line 802 by way of the diode 320.

The AC adapter 330 converts the AC power output from the power outlet 210 into DC power. The AC adapter 330 supplies the DC power after the conversion to the charging circuit 500 via a signal line 803.

The completion time setting section 400 sets a time (hereinafter referred to as "completion time Ts") at which charging of the battery 710 should be completed. In the setting of the completion time Ts, for example, a user inputs a time until the charging is completed based on a current time Tc. The completion time setting section 400 acquires the current time Tc, and sets the completion time Ts by adding the input time to the current time Tc. The current time Tc is acquired, for example, in units of hours, minutes, and seconds. The set completion time Ts is output to the charging circuit 500 via a signal line 801.

The charging circuit 500 charges the battery 710 by controlling the charger 300. Specifically, the charging circuit 500 determines whether or not the charging of the battery 710 will be completed by the completion time Ts by supplying only the natural energy power to the battery 710. When the completion is determined, the charging circuit 500 charges the battery 710 with only the natural energy power. When the completion is not determined, the charging circuit 500 charges the battery 710 with the natural energy power and power of an AC power supply (that is, the power outlet 210).

The solar battery 110 is an example of a natural energy power supply apparatus disclosed in the claims. The completion time setting section 400 is an example of a setting section disclosed in the claims. The battery 710 is an example of a secondary battery disclosed in the claims.

[Configuration Example of Charging Circuit]

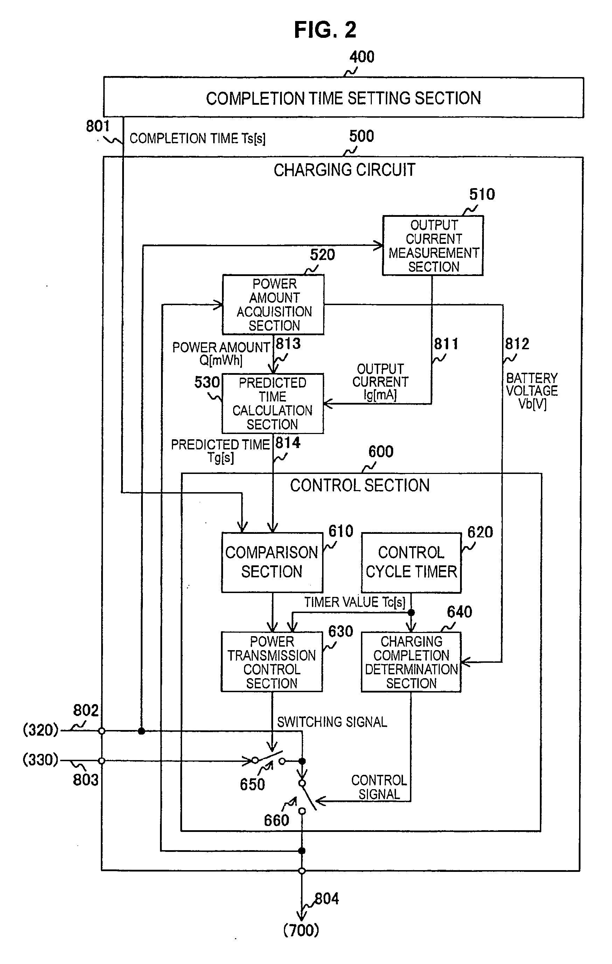

Fig. 2 is a block diagram illustrating the configuration example of the charging circuit 500 according to the first embodiment. The charging circuit 500 includes an output current measurement section 510, a power amount acquisition section 520, a predicted time calculation section 530, and a control section 600. The control section 600 controls an operation of the charging circuit 500, and includes a comparison section 610, a control cycle timer 620, a power transmission control section 630, a charging completion determination section 640, and switches 650 and 660.

The output current measurement section 510 measures a value of an output current Ig output from the solar battery 110 via the signal line 802. As a unit of the measured value, for example, milliamperes (mA) are used. The output current measurement section 510 outputs the measured value of the output current Ig to the predicted time calculation section 530 via a signal line 811.

The power amount acquisition section 520 acquires an amount Q of power that should be supplied until charging of the battery 710 is completed. As a unit of the power amount Q, for example, milli-watt-hours (mWh) are used. A method of acquiring the power amount Q will be described later. The power amount acquisition section 520 outputs the acquired power amount Q to the predicted time calculation section 530 via a signal line 813. In addition, the power amount acquisition section 520 measures the battery voltage Vb of the battery 710, and outputs its voltage value to the charging completion determination section 640 via a signal line 812. As a unit of the battery voltage Vb, for example, volts (V) are used.

The predicted time calculation section 530 calculates a time (hereinafter referred to as "predicted time Tg") at which the charging of the battery 710 will be completed by only the natural energy power. The predicted time Tg is calculated, for example, in units of seconds. Specifically, the predicted time calculation section 530 receives values of the output current Ig and the power amount Q from the output current measurement section 510 and the power amount acquisition section 520. The predicted time calculation section 530 divides a value obtained by converting the unit of the power amount Q into milli-ampere-hours (mAh) by the output current Ig, adds the current time Tc to the value obtained by the division, and designates a time after the addition as the predicted time Tg. The predicted time calculation section 530 outputs the calculated predicted time Tg to the comparison section 610 via a signal line 814.

The switch 650 opens and closes a signal line between the AC adapter 330 and the battery 710 according to control of the power transmission control section 630. The switch 650 closes the signal line, so that power from the AC adapter 330 is supplied to the battery 710. The switch 650 opens the signal line, so that the power supply from the AC adapter 330 is interrupted. One terminal of the switch 650 is connected to the AC adapter 330, and the other terminal is connected to the switch 660.

The switch 660 opens and closes the signal line between the power supply (that is, the solar battery 110 and the power outlet 210) and the battery 710 according to control of the charging completion determination section 640. The switch 660 closes the signal line, so that power from the power supply is connected to the battery 710. The switch 660 opens the signal line, so that the power supply to the battery 710 is interrupted. One terminal of the switch 660 is connected to the switch 650 and the diode 320, and the other terminal is connected to the battery 710.

The comparison section 610 compares the completion time Ts to the predicted time Tg. The comparison section 610 outputs the comparison result to the power transmission control section 630.

The control cycle timer 620 counts a time within a control cycle. Here, the control cycle is a cycle for determining whether or not to switch a charging scheme. For example, the control cycle is set to 60 sec, and the control cycle timer 620 counts the time within the control cycle in units of seconds.

The power transmission control section 630 determines whether or not to switch the charging scheme for each control cycle, and switches the charging scheme based on the determination result. Specifically, the power transmission control section 630 refers to a timer value Tc of the control cycle timer 620, and refers to the comparison result of the comparison section 610 if the timer value Tc is a predetermined value (for example, 60 sec). When the comparison result indicates that the predicted time Tg is earlier than the completion time Ts (that is, when the charging will be completed by only the natural energy power by the completion time Ts), the power transmission control section 630 causes the switch 650 to open the signal line. As a result, only the natural energy power from the solar battery 110 is supplied to the battery 710. On the other hand, when the comparison result indicates that the predicted time Tg is the completion time Ts or later (that is, when the charging will not be completed by only the natural energy power by the completion time Ts), the power transmission control section 630 causes the switch 650 to close the signal line. As a result, power from the solar battery 110 and the AC adapter 330 is supplied to the battery 710.

The charging completion determination section 640 determines whether or not the charging of the battery 710 has been completed for each control cycle. Specifically, the charging completion determination section 640 refers to the timer value Tc of the control cycle timer 620, and determines whether or not the charging has been completed based on a value of the battery voltage Vb measured by the power amount acquisition section 520 if the timer value Tc is a predetermined value (for example, 60 sec). For example, if the battery voltage Vb is greater than or equal to a predetermined threshold value Vth, the charging completion determination section 640 determines that the charging of the battery 710 has been completed. When determining that the charging has been completed, the charging completion determination section 640 ends the charging by causing the switch 660 to open the signal line. When determining that the charging has not been completed, the charging completion determination section 640 continues the charging by causing the switch 660 to close the signal line.

The output current measurement section 510 is an example of an output value acquisition section disclosed in the claims.

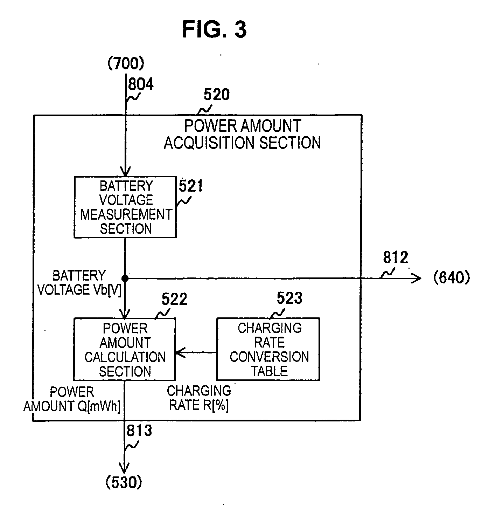

Fig. 3 is a block diagram illustrating a configuration example of the power amount acquisition section 520 according to the first embodiment. The power amount acquisition section 520 includes a battery voltage measurement section 521, a power amount calculation section 522, and a charging rate conversion table 523.

The battery voltage measurement section 521 measures the battery voltage Vb. The battery voltage measurement section 521 outputs a measured voltage value to the power amount calculation section 522 and the charging completion determination section 640.

In the charging rate conversion table 523, the battery voltage Vb and the charging rate R are associated and stored. The charging rate R is a rate of the remaining capacity to the total capacity of the battery 710, and an example of a unit of the charging rate is percent (%). The battery voltage Vb and the charging rate R measured in advance are associated and stored in the charging rate conversion table 523.

The power amount calculation section 522 calculates the power amount Q from the battery voltage Vb. Specifically, first, the power amount calculation section 522 reads the charging rate R corresponding to the battery voltage Vb from the charging rate conversion table 523. The power amount calculation section 522 calculates the power amount Q by substituting the read charging rate R into the following Expression (1).

$$Q[\text{mWh}] = C[\text{mWh}](1 - R[\%]/100) \ \ldots(1)$$

In the above-described Expression (1), C is the total capacity of the battery 710. The power amount calculation section 522 outputs the calculated power amount Q to the predicted time calculation section 530.

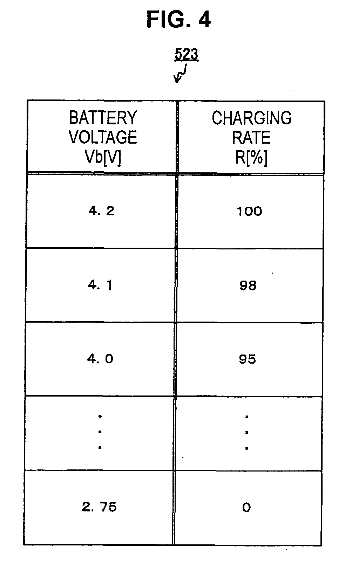

Fig. 4 is a diagram illustrating a configuration example of the charging rate conversion table 523 according to the first embodiment. For example, when the battery voltage Vb of full charge is 4.2 [V], 100[%] is stored as the charging rate R in association with the battery voltage Vb. If the measured value of the battery voltage Vb is 4.1 [V] when a capacity of 2% of the total capacity has been discharged from the full-charge state, 98[%] is stored as the charging rate R in association with the battery voltage Vb.

[Operation Example of Charger]

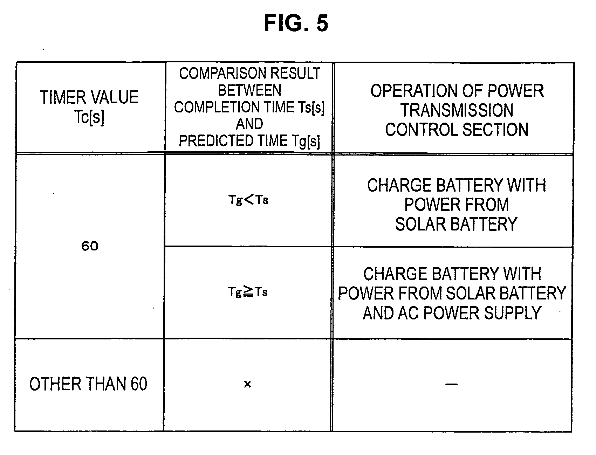

An operation example of the charger 300 will be described with reference to Figs. 5 to 7. Fig. 5 is a table illustrating an example of an operation of the power transmission control section 630 according to the first embodiment. When the timer value Tc is 60 sec, the power transmission control section 630 refers to the comparison result of the comparison section 610. When the predicted time Tg is earlier than the completion time Ts, the power transmission control section 630 causes the battery 710 to be charged with the natural energy power from the solar battery 110. On the other hand, when the predicted time Tg is the completion time Ts or later, the power transmission control section 630 causes the battery 710 to be charged with only power from the solar battery 110 and the AC power supply (that is, the power outlet 210).

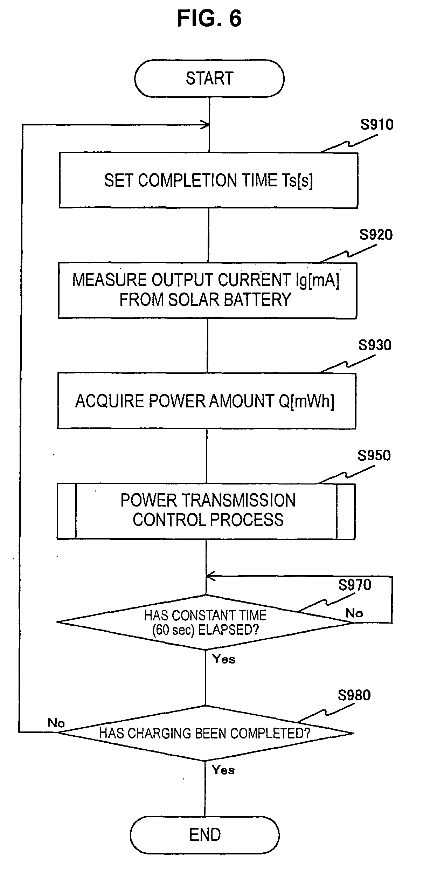

Fig. 6 is a flowchart illustrating the example of the operation of the charger 300 according to the first embodiment.

This operation is started when the charger 300 is connected to the solar battery 110 and the power outlet 210, and the battery pack 700 is attached to the charger 300. The charger 300 receives an input of a time until the charging is completed from the current time Tc. The completion time setting section 400 within the charger 300 sets a time calculated by adding the input time to the current time as the completion time Ts in the charging circuit 500 (step S910). The charger 300 measures the output current Ig from the solar battery 110 (step S920), and acquires the power amount Q based on the battery voltage Vb (step S930). The charger 300 executes a power transmission control process of determining whether or not to switch the charging scheme (step S950).

The charger 300 determines whether or not a constant time (for example, 60 sec) has elapsed (step S970). If the constant time has not elapsed (step S970: No), the charger 300 returns to step S970. If the constant time has elapsed (step S970: Yes), the charger 300 determines whether or not the charging has been completed (step S980). If the charging has not been completed (step S980: No), the charger 300 returns to step S910. If the charging has been completed (step S980: Yes), the charger 300 ends the charging.

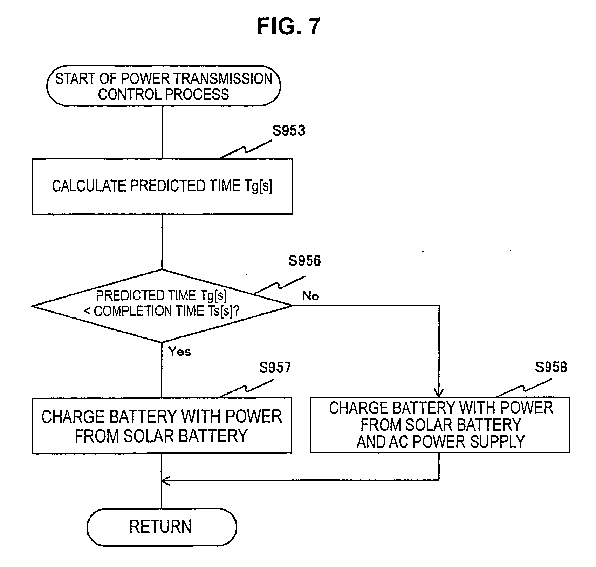

Fig. 7 is a flowchart illustrating an example of the power transmission control process according to the first embodiment. The predicted time calculation section 530 calculates the predicted time Tg based on the power amount Q and the output current Ig (step S953). The control section 600 determines whether or not the predicted time Tg is earlier than the completion time Ts (step S956). When the predicted time Tg is earlier than the completion time Ts (step S956: Yes), the power transmission control section 630 causes the battery 710 to be charged with only natural energy power from the solar battery 110 (step S957). When the predicted time Tg is the completion time Ts or later (step S956: No), the power transmission control section 630 causes the battery 710 to be charged with power from the solar battery 110 and the AC power supply (step S958). After step S957 or S958, the control section 600 ends the power transmission control process.

As described above, according to the first embodiment of the present technology, if the completion time Ts is set, the charging circuit 500 calculates the predicted time Tg at which charging of the battery 710 will be completed by only the natural energy power based on the output current Ig and the power amount Q. When the predicted time Tg is earlier than the completion time Ts, the charging circuit 500 charges the battery 710 with only the natural energy power. According to this configuration, when there is ample time until the time the completion time Ts is reached, the natural energy power is effectively used because the battery 710 is charged with only the natural energy power.

In addition, the charging circuit 500 reliably completes the charging by the completion time Ts because the charging is performed with the power from the AC power supply and the natural energy power when the predicted time Tg is the completion time Ts or later.

Although the charger 300 performs the charging with the natural energy power generated by the solar battery 100, the charging may be performed with natural energy power generated by a power supply apparatus other than the solar battery 110. For example, the charger 300 may use the natural energy power generated by a wind power generation apparatus or a water power generation apparatus.

In addition, although the charger 300 performs constant-voltage charging and measures the output current Ig from the solar battery 110, the charger 300 may perform constant-current charging and measure an output voltage from the solar battery 110. In this case, the predicted time calculation section 530 calculates the predicted time Tg from the measured output voltage and the power amount Q.

In addition, although the power amount acquisition section 520 reads the charging rate R corresponding to the battery voltage Vb from the charging rate conversion table 523, it is possible to define a relational expression indicating a relationship between the battery voltage Vb and the charging rate R and obtain the charging rate R by a calculation based on the relational expression.

In addition, although the power amount acquisition section 520 calculates the power amount Q from the charging rate R, it is possible to provide a table storing a pre-calculated power amount Q for each battery voltage Vb instead of the charging rate conversion table 523, and read the power amount Q from the table.

In addition, although the charging completion determination section 640 determinates whether or not the charging has been completed by comparing the battery voltage Vb to a threshold value, it is possible to determine whether or not charging by another scheme has been completed based on characteristics of the battery 710. For example, when the battery 710 has a characteristic that a battery voltage drops to a small extent if full charge is reached, the charging completion determination section 640 can use a $-\Delta V$ control scheme of ending the charging when the voltage drop ($-\Delta V$) has been detected. Alternatively, when there is a characteristic that heat is generated if the battery 710 is close to the full charge, the charging completion determination section 640 can use a temperature detection control scheme of measuring a temperature of the battery 710 and ending the charging when the temperature has reached a constant value.

<2. Second Embodiment>

[Configuration Example of Charging Circuit]

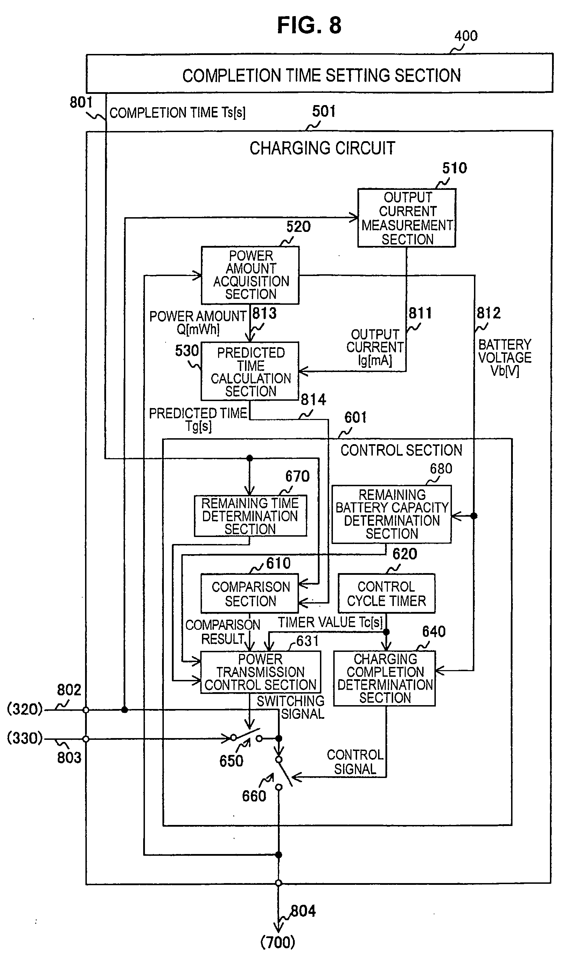

Next, the second embodiment of the present technology will be described with reference to Figs. 8 to 10. Fig. 8 is an overall diagram illustrating a configuration example of a charging circuit 501 according to the second embodiment. The charging circuit 501 is different from the first charging circuit 500 in that charging control is performed based on a time (hereinafter referred to as "remaining time Tr") from a current time Tc to a completion time Ts and the remaining capacity (hereinafter referred to as "remaining battery capacity") of the battery 710. The charging circuit 501 includes a control section 601 instead of the control section 600. The control section 601 is different from the control section 600 of the first embodiment in that a power transmission control section 631 is included instead of the power transmission control section 630 and a remaining time determination section 670 and a remaining battery capacity determination section 680 are further included. The completion time setting section 400 according to the second embodiment of the present technology also outputs the completion time Ts to the remaining time determination section 670 in addition to the comparison section 610. In addition, the power amount acquisition section 520 according to the second embodiment of the present technology also outputs the measured value of the battery voltage Vb to the remaining battery capacity determination section 680 in addition to the charging completion determination section 640.

The remaining time determination section 670 determines whether or not the remaining time Tr is greater than or equal to a predetermined set time (for example, 12 hr). The remaining time determination section 670 outputs the determination result to the power transmission control section 631.

The remaining battery capacity determination section 680 determines whether or not the remaining battery capacity Cr is greater than or equal to a predetermined set capacity (for example, a capacity of 10% of the total capacity). An example of a unit of the remaining battery capacity Cr is mWh. The remaining battery capacity determination section 680 outputs the determination result to the power transmission control section 631.

The power transmission control section 631 causes the charging to be performed with only natural energy power when the remaining time Tr is greater than or equal to a set time, the remaining battery capacity Cr is greater than or equal to the set capacity, and the predicted time Tg is earlier than the completion time Ts. Otherwise, the power transmission control section 631 causes the charging to be performed by the natural energy power and power from the AC power supply.

[Operation Example of Charger]

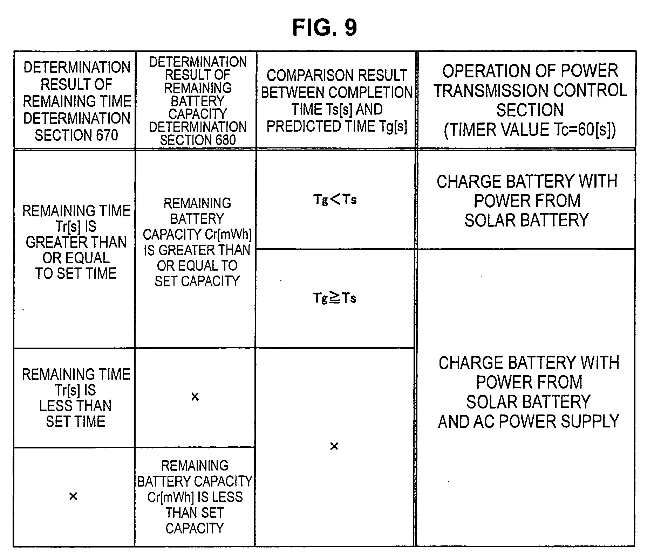

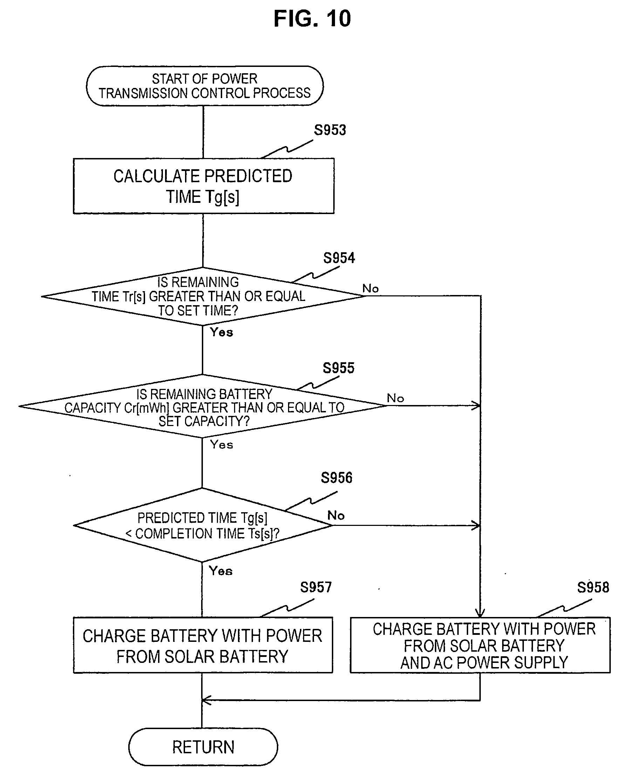

The operation example of the charger 300 according to the second embodiment will be described with reference to Figs. 9 and 10. Fig. 9 is a table illustrating an example of an operation of the power transmission control section 631 according to the second embodiment. When the remaining time Tr is greater than or equal to the set time, the remaining battery capacity Cr is greater than or equal to the set capacity, and the predicted time Tg is earlier than the completion time Ts, the power transmission control section 631 causes the battery 710 to be charged with only power from the solar battery 110. When the remaining time Tr is less than the set time, when the remaining battery capacity Cr is less than the set capacity, or when the predicted time Tg is the completion time Ts or later, the power transmission control section 631 causes the battery 710 to be charged with power from the solar battery 110 and the AC power supply.

Fig. 10 is a flowchart illustrating an example of a power transmission control process according to the second embodiment. The power transmission control process according to the second embodiment is different from the power transmission control process of the first embodiment in that steps S954 and S955 are further executed.

If the predicted time Tg is calculated (step S953), the power transmission control section 631 determines whether or not the remaining time Tr is greater than or equal to the set time (step S954). When the remaining time Tr is greater than or equal to the set time (step S954: Yes), the power transmission control section 631 determines whether or not the remaining battery capacity Cr is greater than or equal to the set capacity (step S955). When the remaining battery capacity Cr is greater than or equal to the set capacity (step S955: Yes), the power transmission control section 631 determines whether or not the predicted time Tg is earlier than the completion time Ts (step S956). The case in which the remaining time Tr is less than the set time (step S954: No), the remaining battery capacity Cr is less than the set capacity (step S955: No), or the predicted time Tg is the completion time Ts or later (step S956: No) will be described. In this case, the power transmission control section 631 causes the battery 710 to be charged with power from the solar battery 110 and the AC power supply (step S958).

According to the second embodiment of the present technology as described above, the power transmission control section 631 causes the battery 710 to be charged with the power from the solar battery 110 and the AC power supply when the remaining time Tr is less than the set time. Thereby, the charging is prevented from not being completed by the completion time Ts.

In addition, when the remaining battery capacity Cr is less than the set capacity, the power transmission control section 631 causes the battery 710 to be charged with the power from the solar battery 110 and the AC power supply. Thereby, a charging time until the set capacity is reached is shortened and the convenience of the user is improved.

<3. Third Embodiment>

[Configuration Example of Charging Circuit]

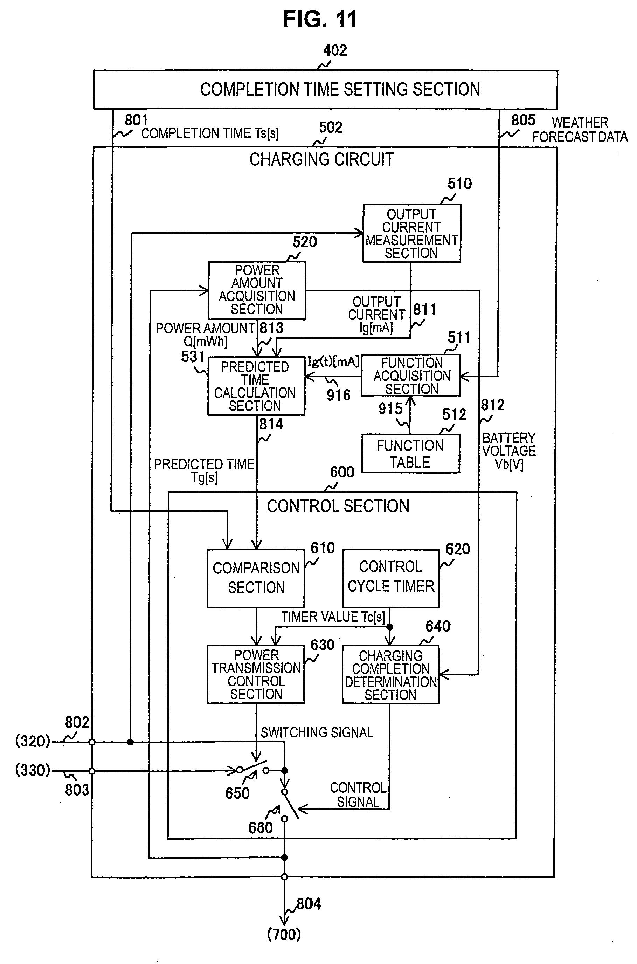

Next, the third embodiment of the present technology will be described with reference to Figs. 11 to 14. A charger 300 of the third embodiment is different from that of the first embodiment in that a predicted time Tg is calculated based on weather forecast data. The charger 300 of the third embodiment is different from the charger 300 of the first embodiment in that a completion time setting section 402 and a charging circuit 502 are included instead of the completion time setting section 400 and the charging circuit 500.

Fig. 11 is an overall diagram illustrating the configuration example of the charging circuit 502 according to the third embodiment. The charging circuit 502 is different from the charging circuit 500 of the first embodiment in that a predicted time calculation section 531 is included instead of the predicted time calculation section 530 and a function acquisition section 511 and a function table 512 are further included.

The completion time setting section 402 further sets weather forecast data in addition to a completion time Ts. The weather forecast data is information indicating a forecast period and weather forecast in the forecast period. For example, when fine weather is forecast on January 1, weather forecast data indicating "January 1" as the forecast period and "Fine" as the weather is set. The completion time setting section 402 outputs the set weather forecast data to the function acquisition section 511 via a signal line 805.

The function table 512 stores a function representing characteristics of a predicted output current Ig for each weather. Because an amount of power generation of the solar battery 110 increases/decreases according to an amount of sunlight, a value of the output current Ig generally increases according to the passage of time from early morning to midday and decreases according to the passage of time from midday to evening. It is possible to approximate a time-series change in a value of the predicted output current Ig to a function (for example, a quadratic function) of the time t based on the characteristics of the output current Ig. In addition, the amount of sunlight fluctuates according to weather. Thus, a different function is defined for each weather and stored in the function table 512.

The function acquisition section 511 acquires a function Ig(t) corresponding to weather. Specifically, when acquiring weather forecast data, the function acquisition section 511 reads the function Ig(t) corresponding to weather indicated by the weather forecast data from the function table 512 via a signal line 915. The function acquisition section 511 outputs the read function Ig(t) and a forecast period indicated by the weather forecast data to the predicted time calculation section 531 via a signal line 916.

Upon receipt of the function Ig(t) and the forecast period, the predicted time calculation section 531 calculates the predicted time Tg from the function Ig(t). Specifically, the predicted time calculation section 531 calculates a time t at which a value of a power amount into which an integral value of Ig(t) in a period until the forecast period has elapsed from the current time Tc is converted is equal to a power amount Q. If the power amount corresponding to the integral value within the forecast period is less than the power amount Q, the predicted time calculation section 531 calculates a time t at which a power amount corresponding to a sum of the integral value of the function Ig(t) until the forecast period has elapsed and the integral value of the function Ig(t) after the forecast period has elapsed is equal to the power amount Q. The predicted time calculation section 531 designates a value obtained by adding the calculated time t to the current time Tc as the predicted time Tg. On the other hand, when the function Ig(t) has not been received, the predicted time calculation section 531 calculates the predicted time Tg from a measured output current Ig.

The function acquisition section 511 is an example of a predicted value acquisition section disclosed in the claims. The function table 512 is an example of a predicted value storage section disclosed in the claims.

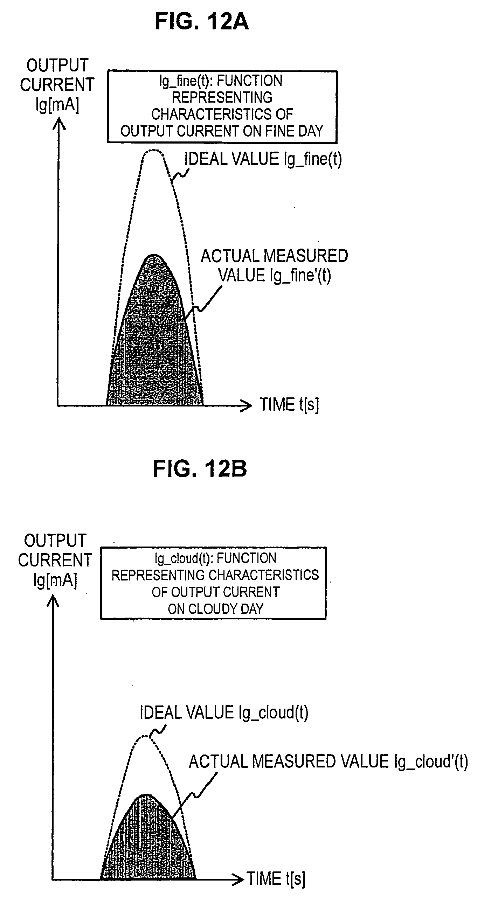

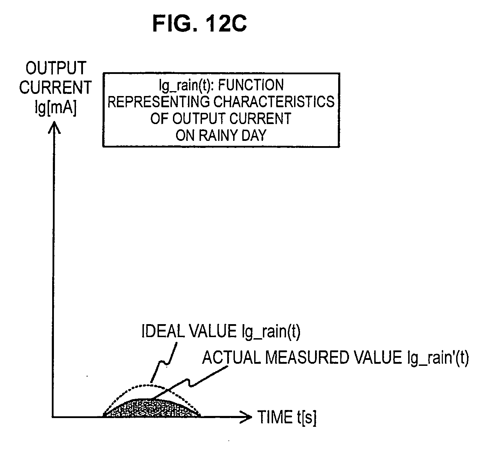

Figs. 12A to 12C are graphs illustrating examples of a function representing characteristics of an output current according to the third embodiment. In Figs. 12A to 12C, a function indicated by the dotted line represents a change in a predicted value of the output current Ig in an ideal environment. A function indicated by the solid line is a function in which an actual measured change in the output current Ig is approximated. Because the amount of power generation of the solar battery 110 differs according to a region or an installation environment, the actual measured value is usually different from an ideal value. A function based on the ideal value is stored in the function table 512 when an actual measured value has not been obtained, and a function to which the function indicated by the dotted line is corrected based on an actual measured value is stored in the function table 512 when the actual measured value has been obtained. Fig. 12A is an example of a function representing characteristics of the output current Ig on a fine day. Fig. 12B is an example of a function representing characteristics of the output current Ig on a cloudy day. Fig. 12C is an example of a function representing characteristics of the output current Ig on a rainy day.

[Operation Example of Charger]

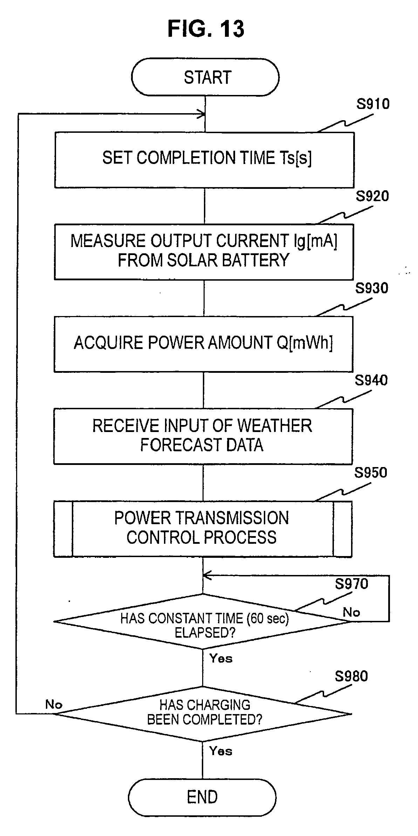

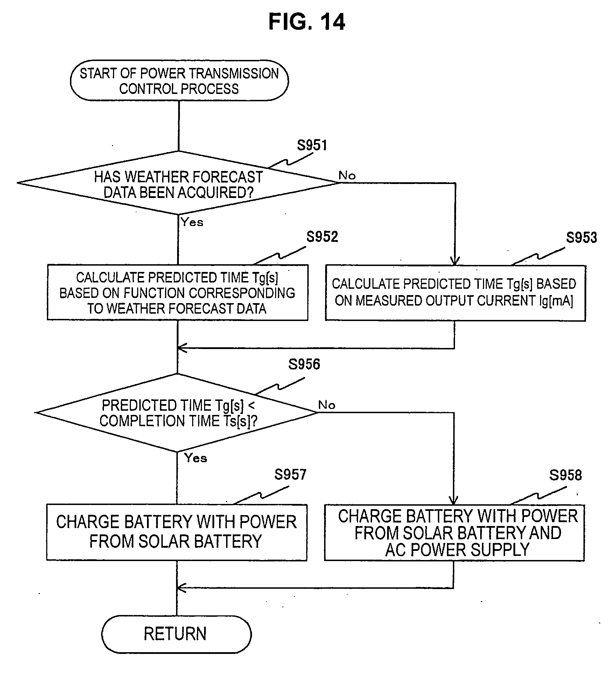

The operation example of the charger 300 according to the third embodiment will be described with reference to Figs. 13 and 14. Fig. 13 is a table illustrating the example of the operation of the charger 300 according to the third embodiment. The operation of the charger 300 of the third embodiment is different from the operation of the charger 300 of the first embodiment in which step S940 is further executed. The charger 300 acquires the power amount Q (step S930), and receives an input of weather forecast data. If the weather forecast data is input, the completion time setting section 402 sets the weather forecast data in the charging circuit 502 (step S940). The charger 300 executes a power transmission control process (step S950).

Fig. 14 is a flowchart illustrating an example of the power transmission control process according to the third embodiment. The power transmission control process of the third embodiment is different from the power transmission control process of the first embodiment in that steps S951 and S952 are further executed.

The charging circuit 502 determines whether weather forecast data has been acquired (step S951). If the weather forecast data has been acquired (step S951: Yes), the predicted time calculation section 531 calculates the predicted time Tg based on the function Ig(t) corresponding to weather indicated by the weather forecast data (step S952). If the weather forecast data has not been acquired (step S951: No), the predicted time calculation section 531 calculates the predicted time Tg based on a measured output current Ig (step S953). After step S952 or S953, the control section 600 determines whether or not the predicted time Tg is earlier than the completion time Ts (step S956).

As described above, according to the third embodiment of the present technology, if the weather forecast data is set, the charging circuit 502 reads a predicted value corresponding to the weather indicated by the weather forecast data from the function table 512, and calculates the predicted time Tg based on the predicted value and the power amount Q. Thereby, the charging circuit 502 can more accurately calculate the predicted time Tg based on fluctuation in natural energy power according to the weather.

Although the weather forecast data is configured to be input by the user, the charger 300 can be configured to acquire the weather forecast data by performing wireless or wired communication.

In addition, although the charging circuit 502 is configured to store the function of the output current Ig for each weather, the charging circuit 502 can be configured to store a predicted value for each weather instead of the function. For example, the charging circuit 502 can store an average value or a median value of the output current Ig for each weather.

In addition, the charging circuit 502 is configured to include both a set of the function acquisition section 511 and the function table 512 and the output current measurement section 510. However, the charging circuit 502 can be configured to include only one of the set of the function acquisition section 511 and the function table 512 and the output current measurement section 510.

<4. Fourth Embodiment>

[Configuration Example of Charging System]

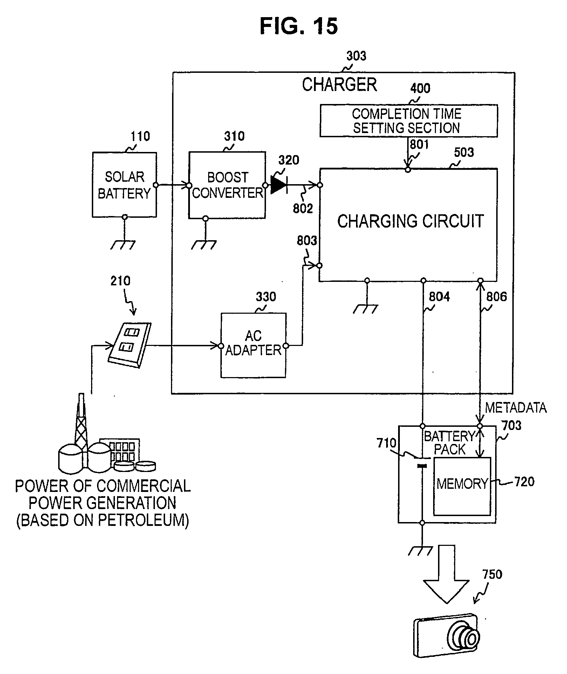

Next, the fourth embodiment of the present technology will be described with reference to Figs. 15 to 21. The charging system of the fourth embodiment is different from the charging system of the first embodiment in that a charging capacity by natural energy power and a charging capacity by power other than the natural energy power are stored.

Fig. 15 is an overall diagram illustrating a configuration example of the charging system according to the fourth embodiment. The charging system of the fourth embodiment is different from the charging system of the first embodiment in that a charger 303 and a battery pack 703 are included instead of the charger 300 and the battery pack 700. The charger 303 is different from the charging circuit 500 of the first embodiment in that a charging circuit 503 is included instead of the charging circuit 500. The battery pack 703 is different from the battery pack 700 of the first embodiment in that a memory 720 is further included.

The charging circuit 503 generates information indicating a charging capacity by natural energy power and a charging capacity by power other than the natural energy power as metadata. The charging circuit 503 outputs the metadata to the memory 720 via a signal line 806. The memory 720 stores the metadata.

The metadata stored in the memory 720 is read by an electronic device 750 in which the battery pack 703 is designated as a power supply. If the battery pack 703 is attached, the electronic device 750 reads the metadata from the memory 720, and displays the charging capacity by the natural energy power and the charging capacity by power other than the natural energy power based on the metadata.

The metadata is an example of charging data disclosed in the claims. The memory 720 is an example of a charging data storage section disclosed in the claims. The electronic device 750 is an example of a display section disclosed in the claims.

[Configuration Example of Charging Circuit]

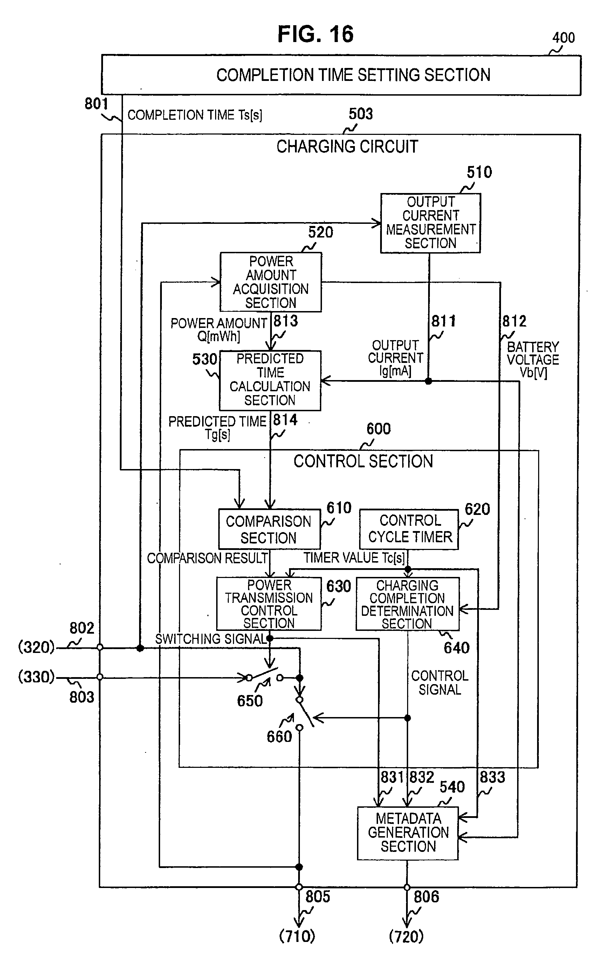

Fig. 16 is a block diagram illustrating the configuration example of the charging circuit 503 according to the fourth embodiment. The charging circuit 503 is different from the charging circuit 500 of the first embodiment in that a metadata generation section 540 is further included.

The metadata generation section 540 generates and outputs metadata. In detail, the metadata generation section 540 acquires a switching signal for controlling a switch 650 from a power transmission control section 630 via a signal line 831. In this switching signal, for example, a value of "1" is set when the switch 650 is caused to close the signal line and a value of "0" is set when the switch 650 is caused to open the signal line. In addition, the metadata generation section 540 acquires a control signal for controlling a switch 660 from a charging completion determination section 640 via a signal line 832. In this control signal, for example, a value of "1" is set when the switch 660 is caused to close the signal line and a value of "0" is set when the switch 660 is caused to open the signal line. Further, the metadata generation section 540 acquires a measured value of an output current Ig from an output current measurement section 510, and acquires a timer value Tc via a signal line 833. During charging with power from a solar battery 110, the metadata generation section 540 adds a value obtained by integrating the timer value Tc with the measured value of the output current Ig to a charging capacity by natural energy power. In addition, during charging with power from an AC power supply, the metadata generation section 540 adds a value obtained by integrating the timer value Tc with an output current of an AC adapter 330 to a charging capacity by power other than the natural energy power. The metadata generation section 540 generates metadata indicating each charging capacity and outputs the generated metadata to the memory 720.

The metadata generation section 540 is an example of a charging data generation section disclosed in the claims.

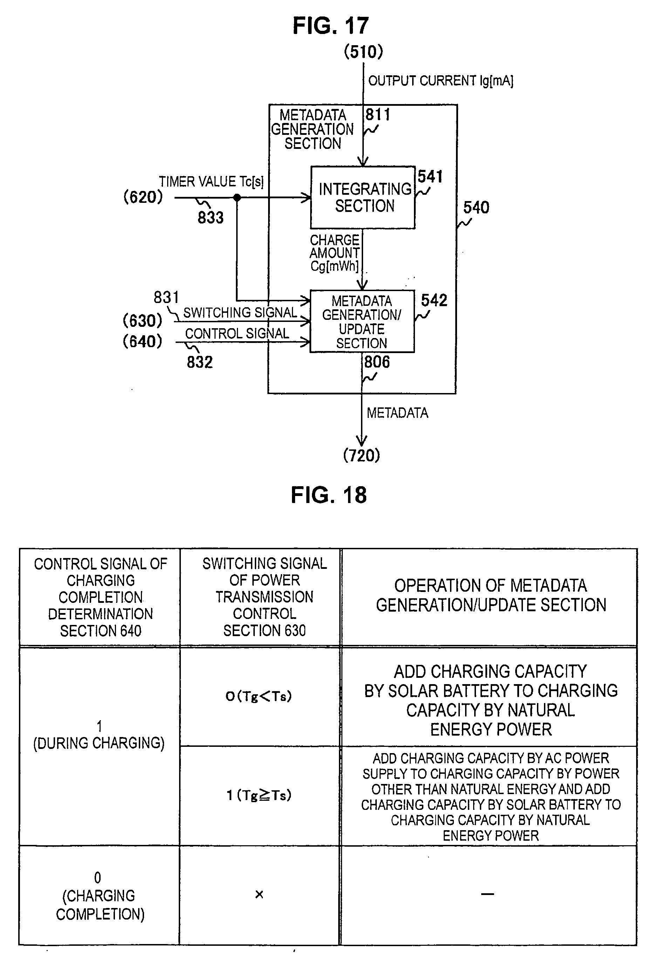

Fig. 17 is a block diagram illustrating a configuration example of the metadata generation section 540 according to the fourth embodiment. The metadata generation section 540 includes an integrating section 541 and a metadata generation/update section 542.

The integrating section 541 calculates a charge amount Cg, which is a value of a power amount into which the integral value of the output current Ig within a control cycle has been converted. An example of a unit of the charge amount Cg is mWh. The integrating section 541 outputs the charge amount Cg to the metadata generation/update section 542.

The metadata generation/update section 542 generates and updates the metadata. The case in which the switch 660 closes the signal line and the switch 650 opens the signal line (that is, when charging with only power from the solar battery 110 is in progress) will be described. In this case, the metadata generation/update section 542 adds the charge amount Cg to the charging capacity by the natural energy power. On the other hand, the case in which the switches 660 and 650 close all signal lines (that is, the case in which charging with power from the solar battery 110 and the AC power supply is in progress) will be described. In this case, the metadata generation/update section 542 adds the charge amount Cg to the charging capacity by the natural energy power, and adds a value obtained by integrating the output current of the AC adapter 330 within the control cycle to the charging capacity by power other than natural energy power. The metadata generation/update section 542 generates and outputs information indicating these charging capacities as metadata. After generating the metadata, the metadata generation/update section 542 updates each charging capacity in the metadata within the memory 720 according to an increase in the timer value Tc. When the switch 660 has opened the signal line (that is, when the charging has been completed), the metadata generation/update section 542 ends the update of the metadata.

[Operation Example of Charger]

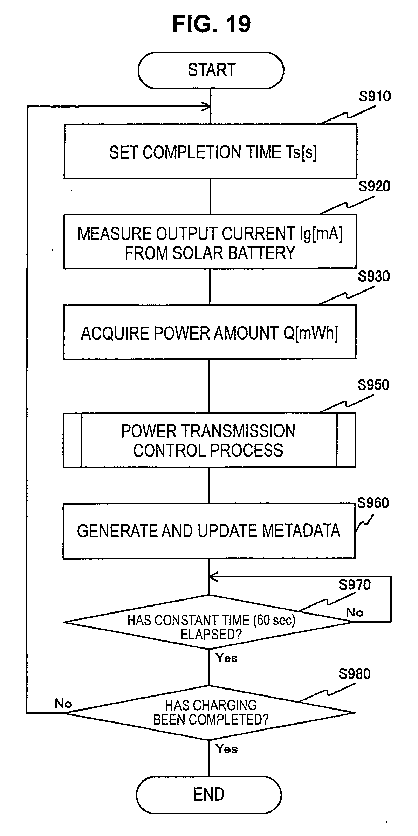

The operation example of the charger 303 according to the fourth embodiment will be described with reference to Figs. 18 and 19. Fig. 18 is a table indicating an example of an operation of the metadata generation/update section 542 according to the fourth embodiment. The case in which a value of a control signal of the charging completion determination section 640 is "1" and a value of a switching signal of the power transmission control section 630 is "0" will be described. In this case, because the predicted time Tg is earlier than the completion time Ts, the battery 710 is charged with only power from the solar battery 110. Thus, the metadata generation/update section 542 adds the charging capacity (that is, the charge amount Cg) by the solar battery 110 to the charging capacity by the natural energy power. On the other hand, the case in which both the switching signal and the control signal are "1" will be described. In this case, because the prediction time Tg is the completion time Ts or later, the battery 710 is charged with power from the solar battery 110 and the AC power supply. Thus, the metadata generation/update section 542 adds the charging capacity by the solar battery 110 to the charging capacity by the natural energy power, and adds the charging capacity by the AC power supply to the charging capacity by the power other than the natural energy power. When the value of the control signal of the charging completion determination section 640 is "0" (that is, when the charging has been completed), the metadata generation/update section 542 ends the update of the metadata.

Fig. 19 is a flowchart illustrating an example of an operation of the charger 303 according to the fourth embodiment. The operation of the charger 303 is different from the operation of the charger 300 of the first embodiment in that step S960 is further executed.

The charger 303 executes a power transmission control process (step S950), and generates and updates metadata (step S960). The charger 303 determines whether or not a constant time has elapsed (step S970).

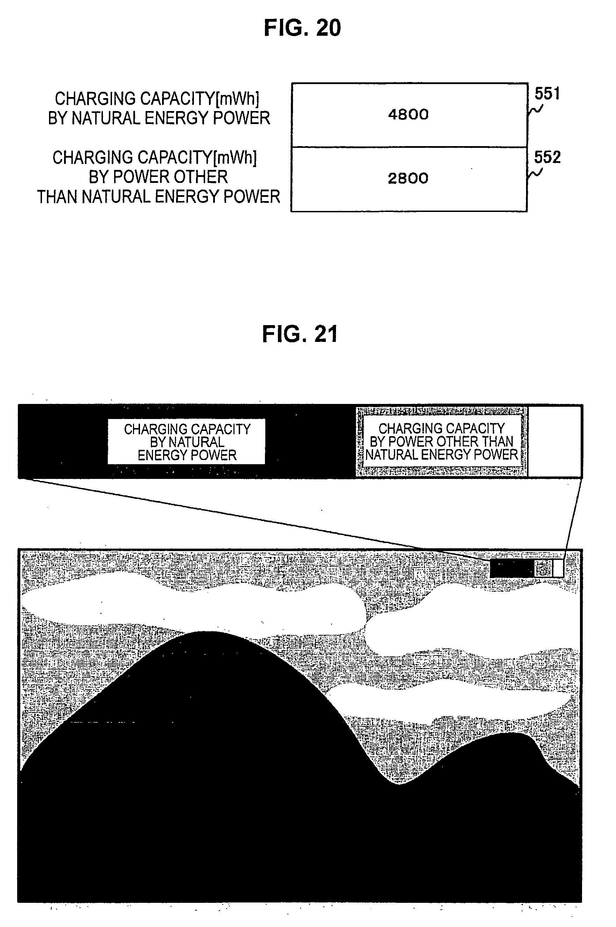

Fig. 20 is a diagram illustrating a configuration example of the metadata according to the fourth embodiment. The metadata includes a region 551 for storing the charging capacity by the natural energy power and a region 552 for storing the charging capacity by the power other than the natural energy power. For example, when a capacity of 4800 [mWh] by the natural energy power is charged and a capacity of 2800 [mWh] by the power other than the natural energy power is charged, data indicating "4800" is stored in the region 551 and data indicating "2800" is stored in the region 552.

Fig. 21 is a display example of content representing the metadata according to the fourth embodiment. The electronic device 750 displays the charging capacity by the natural energy power and the charging capacity by the power other than the natural energy power so that the user easily identifies the charging capacities. For example, the electronic device 750 displays the total capacity of the battery in a single bar and displays a portion of a length obtained by multiplying a charging rate based on the natural energy power by a length of the entire bar in black in the bar. In addition, the electronic device 750 displays a portion of a length obtained by multiplying a charging rate based on power other than the natural energy power by the length of the entire bar in gray, and displays the remaining portion in white.

As described above, according to the fourth embodiment of the present technology, the charging circuit 503 outputs metadata indicating the charging capacity by the natural energy power and the charging capacity by the power other than the natural energy power. Thereby, the electronic device 750 can display each charging capacity. The charging capacity is displayed for each power supply, so that the user can easily recognize how much of the natural energy power has been used in the charging.

In addition, the metadata is stored in the memory 720 within the battery pack 703. Thus, it is possible to acquire each charging capacity if the battery pack 703 is attachable even in a device outside the charger 303.

Although the electronic device 750 is configured to display the content representing the metadata, the charger 303 can be configured to further include a display section, which displays the content representing the metadata.

<5. Fifth Embodiment>

[Configuration Example of Charging System]

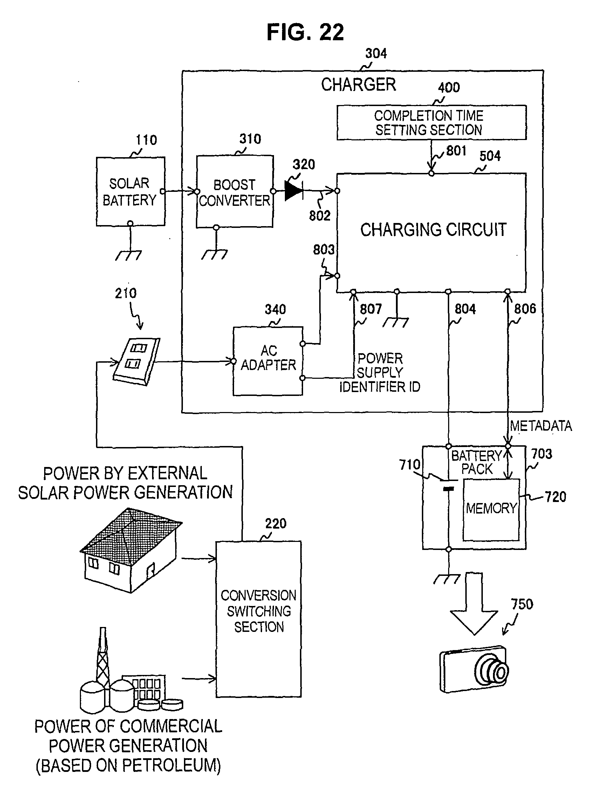

Next, the fifth embodiment of the present technology will be described with reference to Figs. 22 to 26. The charging system of the fifth embodiment is different from the charging system of the fourth embodiment in that metadata is generated by acquiring a supply source of AC power.

Fig. 22 is an overall diagram illustrating the configuration example of the charging system according to the fifth embodiment. The charging system of the fifth embodiment is different from the charging system of the fourth embodiment in that a conversion switching section 220 is further included, and a charger 304 is provided instead of the charger 303.

The conversion switching section 220 receives commercial power and natural energy power from a commercial power supply and a natural energy power supply, and supplies either power to a power outlet 210. An example of this natural energy power supply is an external solar power generation apparatus installed in a place different from that of the solar battery 110. In addition, the conversion switching section 220 superimposes a power supply identifier ID on an AC waveform of supplied AC power using a power line communication (PLC) module or the like. The power supply identifier ID is an identifier for identifying a supply source of the AC power. For example, a value of "0" is set in the power supply identifier ID when the AC power is supplied from the commercial power supply, and a value of "1" is set in the power supply identifier ID when the AC power is supplied from the natural energy power.

The charger 304 is different from the charger 303 of the fourth embodiment in that an AC adapter 340 and a charging circuit 504 are provided instead of the AC adapter 330 and the charging circuit 503.

The AC adapter 340 separates the power supply identifier ID from the AC waveform of the received AC power. The AC adapter 340 converts the AC power into DC power, supplies the DC power to the charging circuit 504 via a signal line 803, and outputs the power supply identifier ID to the charging circuit 504 via a signal line 807.

When charging is performed with the AC power, the charging circuit 504 updates a value of a charging capacity corresponding to a supply source indicated by the power supply identifier ID in the metadata.

The AC adapter 340 is an example of a separation section disclosed in the claims. The power supply identifier ID is an example of a power supply identification signal disclosed in the claims.

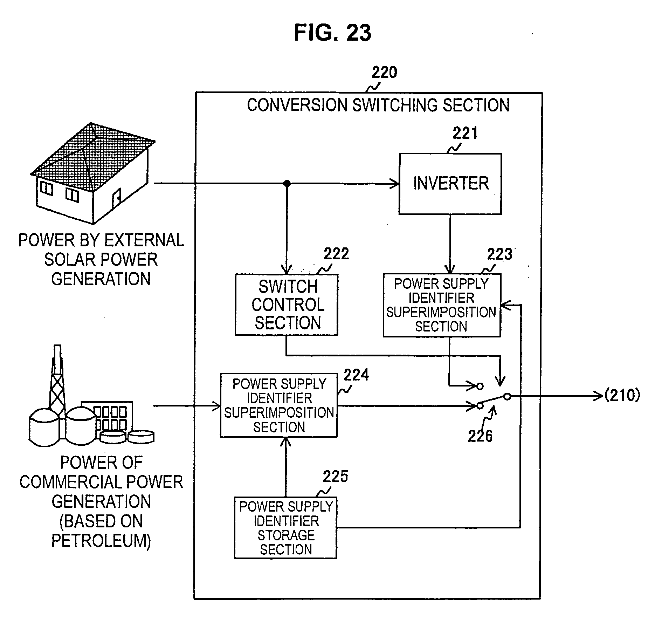

Fig. 23 is a block diagram illustrating a configuration example of the conversion switching section 220 according to the fifth embodiment. The conversion switching section 220 includes an inverter 221, a switch control section 222, power supply identifier superimposition sections 223 and 224, a power supply identifier storage section 225, and a switch 226.

The inverter 221 converts DC power supplied from the natural energy power supply in AC power. The inverter 221 outputs the AC power after the conversion to the power supply identifier superimposition section 223.

The switch control section 222 controls switching of the supply source of the AC power. Specifically, the switch control section 222 monitors an amount of power generation of natural energy power, and controls the switch 226 based on the amount of power generation. For example, the switch control section 222 switches the supply source of the AC power to the natural energy power supply when the amount of power generation of the natural energy power is greater than or equal to a threshold value, and switches the supply source to the commercial power supply when the amount of power generation of the natural energy power is less than the threshold value.

The power supply identifier superimposition section 223 acquires the power supply identifier ID corresponding to the natural energy power supply from the power supply identifier storage section 225, and superimposes the power supply identifier ID on the AC waveform of AC power supplied from the inverter 221. The AC power in which the power supply identifier ID is superimposed on the AC waveform is output to an input terminal of the switch 226.

The power supply identifier superimposition section 224 acquires a power supply identifier ID corresponding to the commercial power supply from the power supply identifier storage section 225, and superimposes the power supply identifier ID on the AC waveform of the AC power supplied from the commercial power supply. The AC power in which the power supply identifier ID is superimposed on the AC waveform is output to an input terminal of the switch 226.

The power supply identifier storage section 225 stores the power supply identifier ID for each power supply. The switch 226 switches the supply source of the AC power according to control of the switch control section 222. The switch 226 includes the two input terminals and one output terminal. One input terminal is connected to the power supply identifier superimposition section 223, and the other input terminal is connected to the power supply identifier superimposition section 224. The output terminal is connected to the power outlet 210 via a converter or the like.

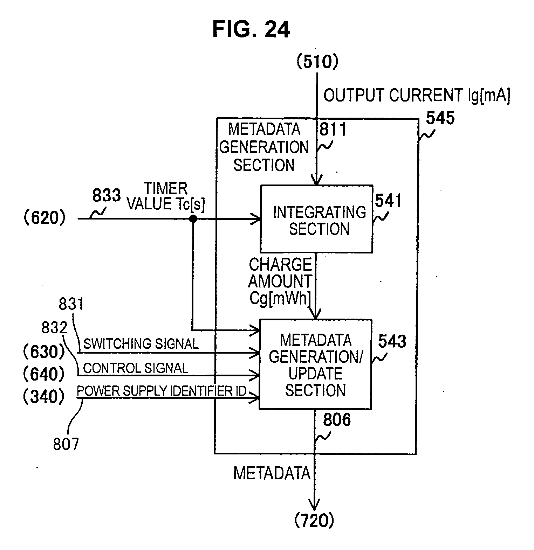

Fig. 24 is a block diagram illustrating a configuration example of a metadata generation section 545 according to the fifth embodiment. The metadata generation section 545 of the fifth embodiment is different from the metadata generation section 540 of the fourth embodiment in that a metadata generation/update section 543 is provided instead of the metadata generation/update section 542.

The metadata generation/update section 543 receives a power supply identifier ID from the AC adapter 340 in addition to a switching signal and a control signal from the power transmission control section 630 and the charging completion determination section 640. The metadata generation/update section 543 identifies a supply source of AC power by referring to the power supply identifier ID when a battery 710 is charged with power from the solar battery 110 and the AC power supply. When an external solar battery is a supply source of the AC power, the metadata generation/update section 543 adds a charging capacity by the power from the AC power supply and the domestic solar battery 110 to a charging capacity by the natural energy power. When the commercial power supply is the supply source of the AC power, the metadata generation/update section 543 adds the charging capacity by the solar battery 110 to the charging capacity by the natural energy power, and adds the charging capacity by the AC power supply to the charging capacity by the power other than the natural energy power.

[Configuration Example of Charger]

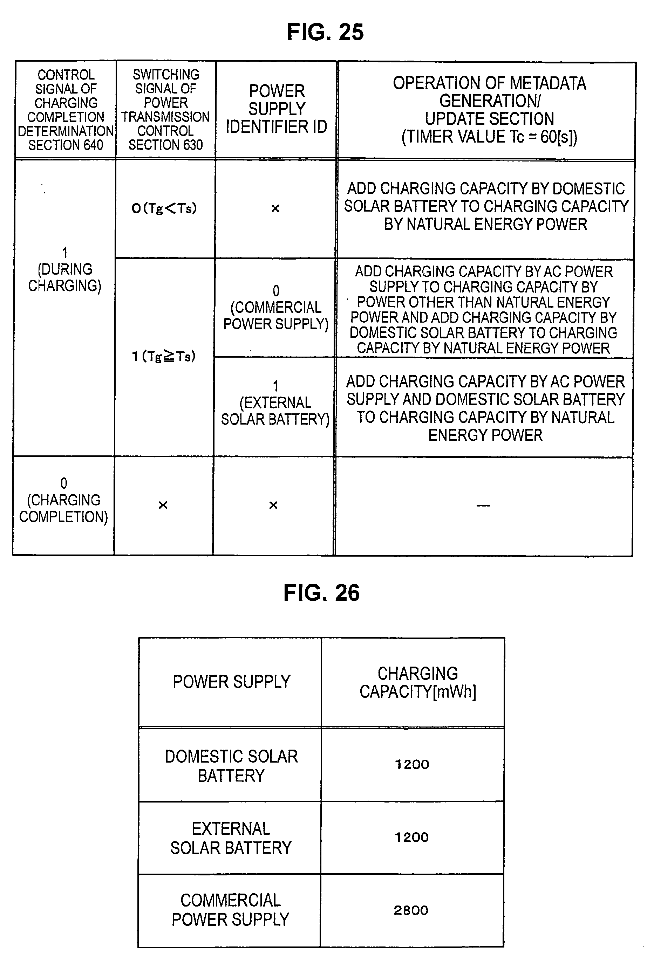

The operation example of the charger 304 according to the fifth embodiment will be described with reference to Fig. 25. Fig. 25 is a table indicating an example of an operation of the metadata generation/update section 543 according to the fifth embodiment. The case in which both a value of the control signal of the charging completion determination section 640 and a value of the switching signal of the power transmission control section 630 are "1" and the power supply identifier ID is "0" will be described. In this case, the power from the solar battery 110 and the commercial power supply is supplied to the battery 710. Thus, the metadata generation/update section 543 adds the charging capacity by the solar battery 110 to the charging capacity by the natural energy power, and adds the charging capacity by the AC power supply to the charging capacity by the power other than the natural energy power.

On the other hand, the case in which the values of both the switching signal and the control signal are "1" and the power supply identifier ID is "1" will be described. In this case, power from the domestic solar battery 110 and power from the external solar battery are supplied to the battery 710. Thus, the metadata generation/update section 543 adds the charging capacities by the domestic solar battery 110 and the AC power supply to the charging capacity by the natural energy power.

As described above, according to the fifth embodiment of the present technology, the charging circuit 504 acquires a power supply identifier ID, and generates metadata based on the power supply identifier ID. Thereby, it is possible to calculate a charging capacity for each supply source even when there are a plurality of supply sources of AC power.

Although the conversion switching section 220 superimposes a power supply identifier ID for identifying whether or not the supply source is a natural energy power supply, an identifier for identifying a type of the natural energy power supply may be superimposed. For example, the conversion switching section 220 may superimpose a power supply identifier for identifying each power supply such as a water power generation apparatus, a solar power generation apparatus, or a geothermal power generation apparatus.

In addition, although the charger 304 calculates the charging capacity by the natural energy power and the charging capacity by power other than the natural energy power, the charging capacity may be calculated for each supply source of natural energy power. For example, the charger 304 calculates each of the charging capacity by the domestic solar battery 110, the charging capacity of the external solar battery, and the charging capacity by the commercial power supply. The charger 304 generates metadata representing each charging capacity as illustrated in Fig. 26. In this metadata, a plurality of regions, each of which stores information indicating a power supply, and a region for storing information indicating a charging capacity are associated and provided.

In addition, although the conversion switching section 220 superimposes the power supply identifier ID on both the AC power from the commercial power supply and the AC power from the natural energy power supply, the power supply identifier ID may be superimposed on only one power supply.

<6. Sixth Embodiment>

[Configuration Example of Charging System]

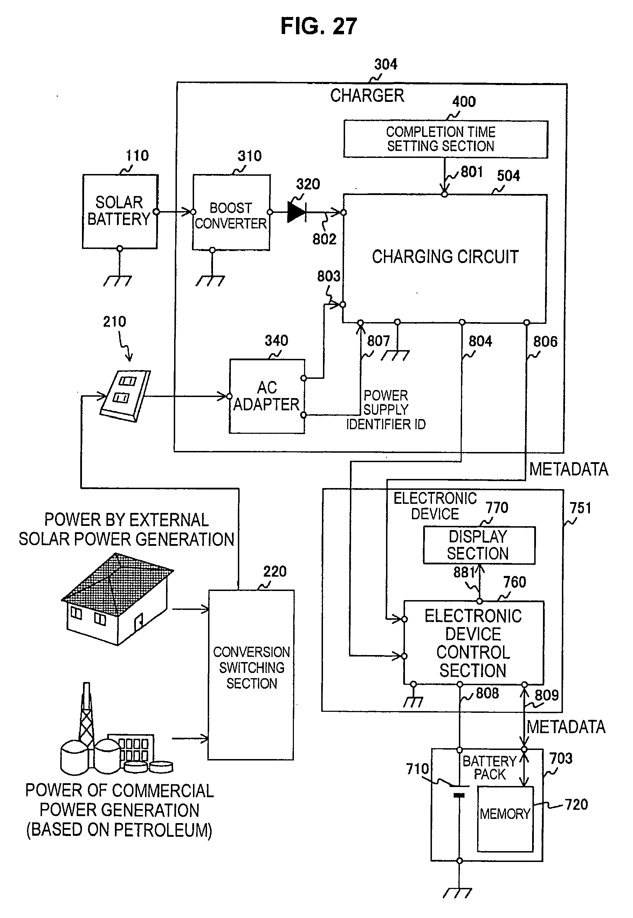

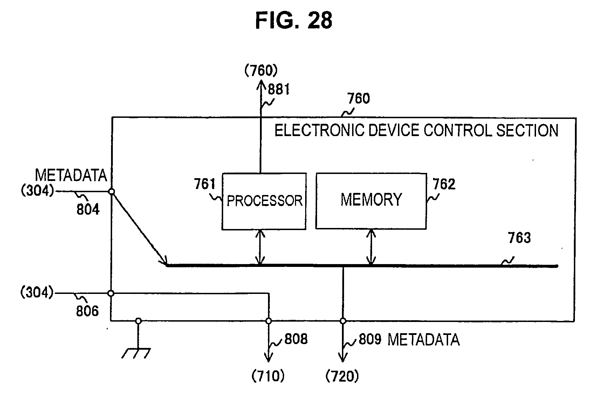

Next, the sixth embodiment of the present technology will be described with reference to Figs. 27 and 28. The charging system according to the sixth embodiment is different from the charging system of the fifth embodiment in that charging is performed via an electronic device.

Fig. 27 is an overall diagram illustrating the configuration example of the charging system according to the sixth embodiment. The charging system according to the sixth embodiment is different from the charging system according to the fifth embodiment in that an electronic device 751 is further included.

The electronic device 751 is a device using a battery pack 703 as a power supply, and includes an electronic device control section 760 and a display section 770. The electronic device control section 760 controls the entire electronic device 751. The electronic device control section 760 receives DC power from a charger 304 via a signal line 804, and receives metadata via a signal line 806. The electronic device control section 760 outputs the received DC power to a battery 710 via a signal line 808, and outputs the metadata to a memory 720 via a signal line 809. In addition, the electronic device control section 760 reads the metadata from the memory 720, and causes the display section 770 to display content representing the metadata. The display section 770 displays the content representing the metadata.

Fig. 28 is a block diagram illustrating a configuration example of the electronic device control section 760 according to the sixth embodiment. The electronic device control section 760 includes a processor 761, a memory 762, and a bus 763.

The processor 761 controls the entire electronic device 751. The processor 761 outputs metadata received from a charger 304 to the battery pack 703. In addition, the processor 761 reads the metadata stored in the battery pack 703, generates data for displaying the content representing the metadata, and outputs the generated data to the display section 770 via a signal line 881.

The memory 762 is a main storage apparatus directly accessible by the processor 761. The bus 763 is a common path through which the processor 761 or the memory 762 transmits or receives data.

As described above, according to the sixth embodiment of the present technology, the charger 304 charges the battery pack 703 via the electronic device 751. Thereby, the charger 304 can charge the battery pack 703 while the battery pack 703 is attached to the electronic device 751, so that convenience of the user is improved.

Although the memory 720 is configured to be provided within the battery pack 703, the memory 720 can be configured to be provided within the electronic device 751 instead of within the battery pack 703. Thereby, it is not necessary to provide the memory 720 in the battery pack 703.

<7. Modified Example>

[Configuration Example of Charging Circuit]

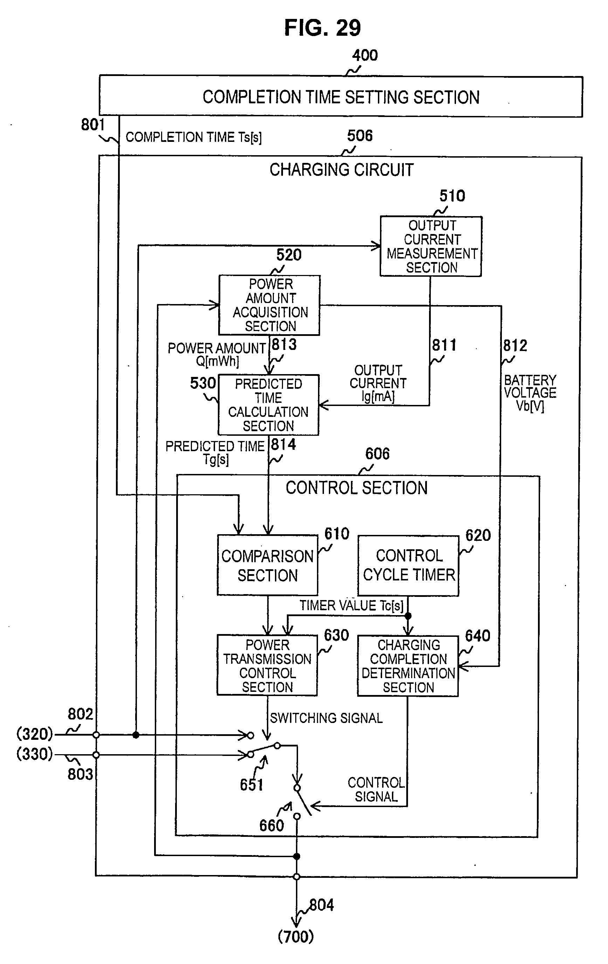

Next, the modified example of the present technology will be described with reference to Fig. 29. Fig. 29 is a block diagram illustrating the configuration example of the charging circuit 506 of the modified example. The charging circuit 506 is different from the charging circuit 500 of the first embodiment in that a control section 606 is included instead of the control section 600. The control section 606 is different from the control section 600 of the first embodiment in that a switch 651 is included instead of the switch 650.

The switch 651 includes two input terminals and one output terminal. One input terminal of the switch 651 is connected to a diode 320, and the other input terminal is connected to an AC adapter 330. The output terminal of the switch 651 is connected to a switch 660. A power transmission control section 630 switches an input destination of the switch 651 to the diode 320 when a predicted time Tg is earlier than a completion time Ts, and switches the input destination of the switch 651 to the AC adapter 330 when the predicted time Tg is the completion time Ts or later. Thereby, a battery 710 is charged with only AC power when the predicted time Tg is the completion time Ts or later. According to this configuration, because only one of natural energy power and power from an AC power supply is supplied, overcharging is less likely to occur as compared to the charger system of the first embodiment in which both are supplied.

The above-described embodiments are examples for embodying the present technology, and matters in the embodiments each have a corresponding relationship with invention-specific matters in the claims. Likewise, the matters in the embodiments and the invention-specific matters in the claims denoted by the same names have a corresponding relationship with each other. However, the present technology is not limited to the embodiments, and various modifications of the embodiments may be embodied in the scope of the present technology without departing from the spirit of the present technology.

In addition, a processing procedure described in the above-described embodiments may be regarded as a method having a series of procedures or regarded as a program for allowing a computer to execute a series of procedures or a recording medium that stores the program. As the recording medium, for example, a compact disc (CD), a mini disc (MD), a digital versatile disc (DVD), a memory card, a Blu-ray disc (registered trade mark), or the like may be used.

The present technology can also have the following configurations.

[1] A charger including: a setting section for setting a completion time that is a time at which charging of a secondary battery is completed; an output value acquisition section for acquiring an output value of a voltage or a current from a natural energy power supply apparatus, which is a power supply apparatus that generates natural energy power from natural energy; a power amount acquisition section for acquiring an amount of power that is supplied until the charging of the secondary battery is completed; a predicted time calculation section for calculating a time at which the charging of the second battery is completed by only the natural energy power based on the output value and the power amount as a predicted time; and a control section for causing the secondary battery to be charged with only the natural energy power when the predicted time is earlier than the completion time.

[2] The charger described above in [1], wherein the control section causes the secondary battery to be charged with power generated by a power supply apparatus other than the natural energy power supply apparatus when the predicted time is the completion time or later.

[3] The charger described above in [2], wherein the control section causes the secondary battery to be charged by further supplying the natural energy power when the predicted time is the completion time or later.

[4] The charger described above in [3], wherein the setting section further sets weather forecast data indicating weather, the output value acquisition section predicts the output value for each weather based on the set weather forecast data, and the prediction time calculation section calculates the predicted time based on the output value predicted for each weather and the power amount.

[5] The charger described above in any one of [2] to [4] further including a charging data generation section for generating and outputting information indicating a charging capacity of the secondary battery by the natural energy power and a charging capacity of the secondary battery by power other than the natural energy power as charging data.

[6] The charger described above in [5], wherein the power supply apparatus other than the natural energy power supply apparatus receives alternating current (AC) power in which a power supply identification signal for identifying a supply source of power is superimposed on an AC waveform, the charger further comprises a separation section for separating the power supply identification signal from the AC waveform, and the charging data generation section generates the charging data based on the separated power supply identification signal.

[7] The charger described above in any one of [1] to [6], wherein the control section causes the secondary battery to be charged with only the natural energy power when a remaining time, which is a time from a current time to the completion time, is greater than or equal to a predetermined time.

[8] The charger described above in any one of [1] to [7], wherein the control section causes the secondary battery to be charged with only the natural energy power when a remaining capacity of the secondary battery is greater than or equal to a predetermined capacity.

[9] The charger described above in any one of [1] to [8], wherein the setting section further sets weather forecast data indicating weather, the output value acquisition section predicts the output value for each weather based on the set weather forecast data, and the predicted time calculation section for calculating the predicted time based on the output value predicted for each weather and the power amount.

[10] A charging system including: a charger; and a battery pack, wherein the charger includes: a setting section for setting a completion time that is a time at which charging of a secondary battery is completed; an output value acquisition section for acquiring an output value of a voltage or a current from a natural energy power supply apparatus, which is a power supply apparatus that generates natural energy power from natural energy; a power amount acquisition section for acquiring an amount of power that is supplied until the charging of the secondary battery is completed; a predicted time calculation section for calculating a time at which the charging of the second battery is completed by only the natural energy power based on the output value and the power amount as a predicted time; a control section for causing the secondary battery to be charged with only the natural energy power when the predicted time is earlier than the completion time and causing the secondary battery to be charged with power generated by a power supply apparatus other than the natural energy power supply apparatus when the predicted time is the completion time or later; and a charging data generation section for generating and outputting information indicating a charging capacity of the secondary battery by the natural energy power and a charging capacity of the secondary battery by power other than the natural energy power as charging data, and wherein the battery pack includes: a charging data storage section for storing the output charging data; and the secondary battery.

[11] The charging system described above in [10], wherein the power supply apparatus other than the natural energy power supply apparatus receives AC power in which a power supply identification signal for identifying a supply source of power is superimposed on an AC waveform, the charger further includes a separation section for separating the power supply identification signal from the AC waveform, and the charging data generation section generates the charging data based on the separated power supply identification signal.

[12] The charging system described above in [10] or [11], wherein the charging system further includes a display section for displaying the charging capacity of the secondary battery by the natural energy power and the charging capacity of the secondary battery by the power other than the natural energy power based on the charging data.

[13] A charging method including: setting a completion time that is a time at which charging of a secondary battery is completed; acquiring an output value of a voltage or a current from a natural energy power supply apparatus, which is a power supply apparatus that generates natural energy power from natural energy; acquiring an amount of power that is supplied until the charging of the secondary battery is completed; calculating a time at which the charging of the second battery is completed by only the natural energy power based on the output value and the power amount as a predicted time; and controlling the secondary battery to be charged with only the natural energy power when the predicted time is earlier than the completion time.

Reference Signs List

| | |
|---|---|
| 110 | Solar battery |
| 210 | Power outlet |
| 220 | Conversion switching section |
| 221 | Inverter |
| 222 | Switch control section |
| 223, 224 | Power supply identifier superimposition section |
| 225 | Power supply identifier storage section |
| 226, 650, 651, 660 | Switch |
| 300, 303, 304 | Charger |
| 310 | Boost converter |
| 320 | Diode |
| 330, 340AC | adapter |
| 400, 402 | Completion time setting section |
| 500, 501, 502, 503, 504, 506 | Charging circuit |

| 510 | Output current measurement section |
| 511 | Function acquisition section |
| 512 | Function table |
| 520 | Power amount acquisition section |
| 521 | Battery voltage measurement section |
| 522 | Power amount calculation section |
| 523 | Charging rate conversion table |
| 530 | Predicted time calculation section |
| 540, 545 | Metadata generation section |
| 541 | Integrating section |
| 542, 543 | Metadata generation/update section |
| 600, 601, 606 | Control section |
| 610 | Comparison section |
| 620 | Control cycle timer |
| 630, 631 | Power transmission control section |
| 640 | Charging completion determination section |
| 670 | Remaining time determination section |
| 680 | Remaining battery capacity determination section |
| 700, 703 | Battery pack |
| 710 | Battery |
| 720, 762 | Memory |
| 750, 751 | Electronic device |
| 760 | Electronic device control section |
| 761 | Processor |
| 763 | Bus |
| 770 | Display section |

**Claims**

1. A charger comprising:

    a setting section for setting a completion time that is a time at which charging of a secondary battery is completed;

an output value acquisition section for acquiring an output value of a voltage or a current from a natural energy power supply apparatus, which is a power supply apparatus that generates natural energy power from natural energy;

a power amount acquisition section for acquiring an amount of power that is supplied until the charging of the secondary battery is completed;

a predicted time calculation section for calculating a time at which the charging of the second battery is completed by only the natural energy power based on the output value and the power amount as a predicted time; and

a control section for causing the secondary battery to be charged with only the natural energy power when the predicted time is earlier than the completion time.

2. The charger according to claim 1,
wherein the control section causes the secondary battery to be charged with power generated by a power supply apparatus other than the natural energy power supply apparatus when the predicted time is the completion time or later.

3. The charger according to claim 2,
wherein the control section causes the secondary battery to be charged by further supplying the natural energy power when the predicted time is the completion time or later.

4. The charger according to claim 3,
wherein the setting section further sets weather forecast data indicating weather,
wherein the output value acquisition section predicts the output value for each weather based on the set weather forecast data, and
wherein the prediction time calculation section calculates the predicted time based on the output value predicted for each weather and the power amount.

5. The charger according to claim 2, further comprising:

a charging data generation section for generating and outputting information indicating a charging capacity of the secondary battery by the natural energy power and a charging capacity of the secondary battery by power other than the natural energy power as charging data.

6. The charger according to claim 5,
wherein the power supply apparatus other than the natural energy power supply apparatus receives alternating current (AC) power in which a power supply identification signal for identifying a supply source of power is superimposed on an AC waveform,
wherein the charger further comprises a separation section for separating the power supply identification signal from the AC waveform, and
wherein the charging data generation section generates the charging data based on the separated power supply identification signal.

7. The charger according to claim 1,
wherein the control section causes the secondary battery to be charged with only the natural energy power when a remaining time, which is a time from a current time to the completion time, is greater than or equal to a predetermined time.

8. The charger according to claim 1,
wherein the control section causes the secondary battery to be charged with only the natural energy power when a remaining capacity of the secondary battery is greater than or equal to a predetermined capacity.

9. The charger according to claim 1,
wherein the setting section further sets weather forecast data indicating weather,
wherein the output value acquisition section predicts the output value for each weather based on the set weather forecast data, and
wherein the predicted time calculation section for calculating the predicted time based on the output value predicted for each weather and the power amount.

10. A charging system comprising:

a charger; and
a battery pack,
wherein the charger includes:

a setting section for setting a completion time that is a time at which charging of a secondary battery is completed;
an output value acquisition section for acquiring an output value of a voltage or a current from a natural energy power supply apparatus, which is a power supply apparatus that generates natural energy power from natural energy;
a power amount acquisition section for acquiring an amount of power that is supplied until the charging of the secondary battery is completed;
a predicted time calculation section for calculating a time at which the charging of the second battery is completed by only the natural energy power based on the output value and the power amount as a predicted time;
a control section for causing the secondary battery to be charged with only the natural energy power when the predicted time is earlier than the completion time and causing the secondary battery to be charged with power generated by a power supply apparatus other than the natural energy power supply apparatus when the predicted time is the completion time or later; and
a charging data generation section for generating and outputting information indicating a charging capacity of the secondary battery by the natural energy power and a charging capacity of the secondary battery by power other than the natural energy power as charging data, and

wherein the battery pack includes:

a charging data storage section for storing the output charging data; and
the secondary battery.

11. The charging system according to claim 10,
wherein the power supply apparatus other than the natural energy power supply apparatus receives AC power in which a power supply identification signal for identifying a supply source of power is superimposed on an AC waveform,
wherein the charger further includes a separation section for separating the power supply identification signal from the AC waveform, and
wherein the charging data generation section generates the charging data based on the separated power supply identification signal.

12. The charging system according to claim 10, further comprising:

a display section for displaying the charging capacity of the secondary battery by the natural energy power and the charging capacity of the secondary battery by the power other than the natural energy power based on the charging data.

13. A charging method comprising:

setting a completion time that is a time at which charging of a secondary battery is completed;
acquiring an output value of a voltage or a current from a natural energy power supply apparatus, which is a power supply apparatus that generates natural energy power from natural energy;
acquiring an amount of power that is supplied until the charging of the secondary battery is completed;
calculating a time at which the charging of the second battery is completed by only the natural energy power based on the output value and the power amount as a predicted time; and
controlling the secondary battery to be charged with only the natural energy power when the predicted time is earlier than the completion time.

# FIG. 1

300

CHARGER

400

COMPLETION TIME
SETTING SECTION

110

SOLAR
BATTERY

310

BOOST
CONVERTER

320

802

801

500

CHARGING CIRCUIT

803

210

330

AC
ADAPTER

804

POWER OF COMMERCIAL
POWER GENERATION
(BASED ON PETROLEUM)

700

710

BATTERY
PACK

## FIG. 2

400

**COMPLETION TIME SETTING SECTION**

801 COMPLETION TIME Ts[s]  500

**CHARGING CIRCUIT**

510

**OUTPUT CURRENT MEASUREMENT SECTION**

520

**POWER AMOUNT ACQUISITION SECTION**

POWER AMOUNT 813 Q[mWh]

530 **PREDICTED TIME CALCULATION SECTION**

OUTPUT CURRENT 811 Ig[mA]

812 BATTERY VOLTAGE Vb[V]

PREDICTED TIME 814 Tg[s]

600

**CONTROL SECTION**

610 **COMPARISON SECTION**

620 **CONTROL CYCLE TIMER**

TIMER VALUE Tc[s]

640

630 **POWER TRANSMISSION CONTROL SECTION**

**CHARGING COMPLETION DETERMINATION SECTION**

802 (320)

803 (330)

SWITCHING SIGNAL

650

660

CONTROL SIGNAL

804 (700)

# FIG. 3

(700)

804

520

POWER AMOUNT
ACQUISITION SECTION

| BATTERY VOLTAGE MEASUREMENT SECTION | 521 |

BATTERY
VOLTAGE Vb[V]

812 → (640)

522

523

| POWER AMOUNT CALCULATION SECTION | ← | CHARGING RATE CONVERSION TABLE |

POWER
AMOUNT Q[mWh]

CHARGING
RATE R[%]

813

(530)

# FIG. 4

523

| BATTERY VOLTAGE Vb[V] | CHARGING RATE R[%] |
|---|---|
| 4. 2 | 100 |
| 4. 1 | 98 |
| 4. 0 | 95 |
| . . . | . . . |
| 2. 75 | 0 |

# FIG. 5

| TIMER VALUE Tc[s] | COMPARISON RESULT BETWEEN COMPLETION TIME Ts[s] AND PREDICTED TIME Tg[s] | OPERATION OF POWER TRANSMISSION CONTROL SECTION |
|---|---|---|
| 60 | $Tg < Ts$ | CHARGE BATTERY WITH POWER FROM SOLAR BATTERY |
| | $Tg \geqq Ts$ | CHARGE BATTERY WITH POWER FROM SOLAR BATTERY AND AC POWER SUPPLY |
| OTHER THAN 60 | × | — |

# FIG. 6

```
                    START

                                          S910
        SET COMPLETION TIME Ts[s]

                                          S920
     MEASURE OUTPUT CURRENT Ig[mA]
          FROM SOLAR BATTERY

                                          S930
       ACQUIRE POWER AMOUNT Q[mWh]

                                          S950
         POWER TRANSMISSION
         CONTROL PROCESS

                                          S970
        HAS CONSTANT TIME            No
        (60 sec) ELAPSED?

              Yes
                                          S980
   No
        HAS CHARGING BEEN COMPLETED?

              Yes

                    END
```

# FIG. 7

```
START OF POWER TRANSMISSION
     CONTROL PROCESS
```

S953

CALCULATE PREDICTED TIME Tg[s]

S956

PREDICTED TIME Tg[s]
< COMPLETION TIME Ts[s]?    No

Yes

S957

CHARGE BATTERY WITH POWER
FROM SOLAR BATTERY

S958

CHARGE BATTERY WITH POWER
FROM SOLAR BATTERY
AND AC POWER SUPPLY

RETURN

## FIG. 8

400

**COMPLETION TIME SETTING SECTION**

801

COMPLETION TIME Ts[s]     501

**CHARGING CIRCUIT**

510

**OUTPUT CURRENT MEASUREMENT SECTION**

520

**POWER AMOUNT ACQUISITION SECTION**

POWER AMOUNT 813
Q[mWh]

811
OUTPUT CURRENT
Ig[mA]

812
BATTERY VOLTAGE
Vb[V]

530 **PREDICTED TIME CALCULATION SECTION**

814

PREDICTED TIME
Tg[s]

601

**CONTROL SECTION**

670

**REMAINING TIME DETERMINATION SECTION**

680

**REMAINING BATTERY CAPACITY DETERMINATION SECTION**

620

610

**COMPARISON SECTION**

**CONTROL CYCLE TIMER**

COMPARISON RESULT

TIMER VALUE Tc[s]

640

631

**POWER TRANSMISSION CONTROL SECTION**

**CHARGING COMPLETION DETERMINATION SECTION**

SWITCHING SIGNAL

802

(320)

(330)

803

650

660

CONTROL SIGNAL

804

(700)

EP 2 683 056 A1

## FIG. 9

| DETERMINATION RESULT OF REMAINING TIME DETERMINATION SECTION 670 | DETERMINATION RESULT OF REMAINING BATTERY CAPACITY DETERMINATION SECTION 680 | COMPARISON RESULT BETWEEN COMPLETION TIME Ts[s] AND PREDICTED TIME Tg[s] | OPERATION OF POWER TRANSMISSION CONTROL SECTION (TIMER VALUE Tc=60[s]) |
|---|---|---|---|
| REMAINING TIME Tr[s] IS GREATER THAN OR EQUAL TO SET TIME | REMAINING BATTERY CAPACITY Cr[mWh] IS GREATER THAN OR EQUAL TO SET CAPACITY | $Tg<Ts$ | CHARGE BATTERY WITH POWER FROM SOLAR BATTERY |
| | | $Tg\geqq Ts$ | CHARGE BATTERY WITH POWER FROM SOLAR BATTERY AND AC POWER SUPPLY |
| REMAINING TIME Tr[s] IS LESS THAN SET TIME | × | × | |
| × | REMAINING BATTERY CAPACITY Cr[mWh] IS LESS THAN SET CAPACITY | × | |

# FIG. 10

START OF POWER
TRANSMISSION CONTROL PROCESS

S953

CALCULATE PREDICTED
TIME Tg[s]

S954

IS REMAINING
TIME Tr[s] GREATER THAN OR EQUAL
TO SET TIME?

No

Yes

S955

IS REMAINING BATTERY
CAPACITY Cr[mWh] GREATER THAN OR EQUAL TO
SET CAPACITY?

No

Yes

S956

PREDICTED TIME Tg[s]
< COMPLETION TIME Ts[s]?

No

Yes

S957

CHARGE BATTERY WITH POWER
FROM SOLAR BATTERY

S958

CHARGE BATTERY WITH POWER
FROM SOLAR BATTERY
AND AC POWER SUPPLY

RETURN

# FIG. 11

**402**

## COMPLETION TIME SETTING SECTION

**801** COMPLETION TIME Ts[s]  **502**  **805** WEATHER FORECAST DATA

## CHARGING CIRCUIT

**510**
OUTPUT CURRENT MEASUREMENT SECTION

**520**
POWER AMOUNT ACQUISITION SECTION

POWER AMOUNT **813** Q[mWh]

OUTPUT CURRENT **811** Ig[mA]

**531**
PREDICTED TIME CALCULATION SECTION

Ig(t)[mA] **916**

**511**
FUNCTION ACQUISITION SECTION

**814**

**915**  **512**  **812** BATTERY VOLTAGE Vb[V]

PREDICTED TIME Tg[s]

FUNCTION TABLE

**600**

## CONTROL SECTION

**610**
COMPARISON SECTION

**620**
CONTROL CYCLE TIMER

TIMER VALUE Tc[s]  **640**

**630**
POWER TRANSMISSION CONTROL SECTION

CHARGING COMPLETION DETERMINATION SECTION

**802**
(320)

**803**
(330)

SWITCHING SIGNAL

**650**

CONTROL SIGNAL

**660**

**804**
(700)

## FIG. 12A

OUTPUT CURRENT Ig[mA]

Ig_fine(t): FUNCTION REPRESENTING CHARACTERISTICS OF OUTPUT CURRENT ON FINE DAY

IDEAL VALUE Ig_fine(t)

ACTUAL MEASURED VALUE Ig_fine'(t)

TIME t[s]

## FIG. 12B

OUTPUT CURRENT Ig[mA]

Ig_cloud(t): FUNCTION REPRESENTING CHARACTERISTICS OF OUTPUT CURRENT ON CLOUDY DAY

IDEAL VALUE Ig_cloud(t)

ACTUAL MEASURED VALUE Ig_cloud'(t)

TIME t[s]

32

# FIG. 12C

OUTPUT
CURRENT
Ig[mA]

Ig_rain(t): FUNCTION
REPRESENTING CHARACTERISTICS
OF OUTPUT CURRENT
ON RAINY DAY

IDEAL VALUE Ig_rain(t)

ACTUAL MEASURED VALUE Ig_rain'(t)

TIME t[s]

# FIG. 13

START

SET COMPLETION TIME Ts[s] — S910

MEASURE OUTPUT CURRENT Ig[mA]
FROM SOLAR BATTERY — S920

ACQUIRE POWER AMOUNT Q[mWh] — S930

RECEIVE INPUT OF WEATHER
FORECAST DATA — S940

POWER TRANSMISSION
CONTROL PROCESS — S950

HAS CONSTANT TIME (60 sec)
ELAPSED? — S970 — No

Yes

HAS CHARGING
BEEN COMPLETED? — S980 — No

Yes

END

# FIG. 14

```
      ( START OF POWER TRANSMISSION )
      (        CONTROL PROCESS       )
                    │
                    │                    S951
              ┌─────┴─────┐
         ┌────┤ HAS WEATHER FORECAST ├──── No ──────────────┐
         │    │ DATA BEEN ACQUIRED?  │                      │
         │    └───────────┬──────────┘                      │
         │                │ Yes                             │
         │   S952         │                      S953       │
  ┌──────┴─────────────────────────┐     ┌──────────────────┴──────────────┐
  │ CALCULATE PREDICTED TIME Tg[s]  │     │ CALCULATE PREDICTED TIME Tg[s]  │
  │ BASED ON FUNCTION CORRESPONDING │     │ BASED ON MEASURED OUTPUT        │
  │ TO WEATHER FORECAST DATA        │     │ CURRENT Ig[mA]                  │
  └──────┬──────────────────────────┘     └──────────┬──────────────────────┘
         │←───────────────────────────────────────────┘
         │            S956
   ┌─────┴──────┐
   │ PREDICTED TIME Tg[s] < │──── No ──────────────┐
   │ COMPLETION TIME Ts[s]? │                      │
   └─────┬──────┘                                  │
         │ Yes                                     │
         │   S957                        S958      │
  ┌──────┴─────────────────┐     ┌────────────────┴──────────────┐
  │ CHARGE BATTERY WITH     │     │ CHARGE BATTERY WITH POWER     │
  │ POWER FROM SOLAR BATTERY│     │ FROM SOLAR BATTERY AND        │
  │                         │     │ AC POWER SUPPLY               │
  └──────┬──────────────────┘     └────────────┬──────────────────┘
         │←──────────────────────────────────────┘
         │
      (       RETURN        )
```

# FIG. 15

# FIG. 16

400

COMPLETION TIME SETTING SECTION

801

COMPLETION TIME Ts[s]

503

CHARGING CIRCUIT

510

OUTPUT CURRENT MEASUREMENT SECTION

520

POWER AMOUNT ACQUISITION SECTION

POWER AMOUNT Q[mWh] 813

811 OUTPUT CURRENT Ig[mA]

812 BATTERY VOLTAGE Vb[V]

530 PREDICTED TIME CALCULATION SECTION

PREDICTED TIME Tg[s] 814

600

CONTROL SECTION

COMPARISON SECTION 610

CONTROL CYCLE TIMER 620

COMPARISON RESULT

TIMER VALUE Tc[s]

POWER TRANSMISSION CONTROL SECTION 630

CHARGING COMPLETION DETERMINATION SECTION

640

802

(320)

SWITCHING SIGNAL

(330)

803

650

660

CONTROL SIGNAL

831 832 540 833

METADATA GENERATION SECTION

805

806

(710)

(720)

EP 2 683 056 A1

# FIG. 17

# FIG. 18

| CONTROL SIGNAL OF CHARGING COMPLETION DETERMINATION SECTION 640 | SWITCHING SIGNAL OF POWER TRANSMISSION CONTROL SECTION 630 | OPERATION OF METADATA GENERATION/UPDATE SECTION |
|---|---|---|
| 1 (DURING CHARGING) | 0 ($Tg < Ts$) | ADD CHARGING CAPACITY BY SOLAR BATTERY TO CHARGING CAPACITY BY NATURAL ENERGY POWER |
| | 1 ($Tg \geq Ts$) | ADD CHARGING CAPACITY BY AC POWER SUPPLY TO CHARGING CAPACITY BY POWER OTHER THAN NATURAL ENERGY AND ADD CHARGING CAPACITY BY SOLAR BATTERY TO CHARGING CAPACITY BY NATURAL ENERGY POWER |
| 0 (CHARGING COMPLETION) | × | — |

## FIG. 19

START

S910

SET COMPLETION TIME Ts[s]

S920

MEASURE OUTPUT CURRENT Ig[mA]
FROM SOLAR BATTERY

S930

ACQUIRE POWER AMOUNT Q[mWh]

S950

POWER TRANSMISSION
CONTROL PROCESS

S960

GENERATE AND UPDATE METADATA

S970

HAS CONSTANT TIME (60 sec)
ELAPSED?     No

Yes

S980

No     HAS CHARGING
BEEN COMPLETED?

Yes

END

## FIG. 20

| CHARGING CAPACITY[mWh] BY NATURAL ENERGY POWER | 4800 | 551 |
| CHARGING CAPACITY[mWh] BY POWER OTHER THAN NATURAL ENERGY POWER | 2800 | 552 |

## FIG. 21

# FIG. 22

CHARGER 304

400 COMPLETION TIME SETTING SECTION

110 SOLAR BATTERY

310 BOOST CONVERTER

320

801 504

CHARGING CIRCUIT

802

803

210

340 AC ADAPTER

807 POWER SUPPLY IDENTIFIER ID

804 806

METADATA

710 BATTERY PACK 703

MEMORY 720

POWER BY EXTERNAL SOLAR POWER GENERATION

220 CONVERSION SWITCHING SECTION

750

POWER OF COMMERCIAL POWER GENERATION (BASED ON PETROLEUM)

# FIG. 23

**220**

### CONVERSION SWITCHING SECTION

POWER BY EXTERNAL
SOLAR POWER
GENERATION

**221**

INVERTER

**222**

SWITCH
CONTROL
SECTION

**223**

POWER SUPPLY
IDENTIFIER
SUPERIMPOSITION
SECTION

**224**

POWER SUPPLY
IDENTIFIER
SUPERIMPOSITION
SECTION

POWER OF
COMMERCIAL POWER
GENERATION
(BASED ON
PETROLEUM)

→ (210)

**226**

**225**

POWER SUPPLY
IDENTIFIER
STORAGE
SECTION

# FIG. 24

(510)

OUTPUT CURRENT Ig[mA]

545

METADATA GENERATION SECTION    811

833 TIMER VALUE Tc[s]

(620)

INTEGRATING SECTION    541

CHARGE AMOUNT Cg[mWh]

831
832
(630) SWITCHING SIGNAL
(640) CONTROL SIGNAL
(340) POWER SUPPLY IDENTIFIER ID

807

METADATA GENERATION/ UPDATE SECTION    543

806

METADATA

(720)

## FIG. 25

| CONTROL SIGNAL OF CHARGING COMPLETION DETERMINATION SECTION 640 | SWITCHING SIGNAL OF POWER TRANSMISSION CONTROL SECTION 630 | POWER SUPPLY IDENTIFIER ID | OPERATION OF METADATA GENERATION/ UPDATE SECTION (TIMER VALUE Tc = 60[s]) |
|---|---|---|---|
| 1 (DURING CHARGING) | 0 (Tg<Ts) | × | ADD CHARGING CAPACITY BY DOMESTIC SOLAR BATTERY TO CHARGING CAPACITY BY NATURAL ENERGY POWER |
| | 1 (Tg≧Ts) | 0 (COMMERCIAL POWER SUPPLY) | ADD CHARGING CAPACITY BY AC POWER SUPPLY TO CHARGING CAPACITY BY POWER OTHER THAN NATURAL ENERGY POWER AND ADD CHARGING CAPACITY BY DOMESTIC SOLAR BATTERY TO CHARGING CAPACITY BY NATURAL ENERGY POWER |
| | | 1 (EXTERNAL SOLAR BATTERY) | ADD CHARGING CAPACITY BY AC POWER SUPPLY AND DOMESTIC SOLAR BATTERY TO CHARGING CAPACITY BY NATURAL ENERGY POWER |
| 0 (CHARGING COMPLETION) | × | × | — |

## FIG. 26

| POWER SUPPLY | CHARGING CAPACITY[mWh] |
|---|---|
| DOMESTIC SOLAR BATTERY | 1200 |
| EXTERNAL SOLAR BATTERY | 1200 |
| COMMERCIAL POWER SUPPLY | 2800 |

# FIG. 27

# FIG. 28

# FIG. 29

400

## COMPLETION TIME SETTING SECTION

801

COMPLETION TIME Ts[s]

506

### CHARGING CIRCUIT

510

**OUTPUT CURRENT MEASUREMENT SECTION**

520

**POWER AMOUNT ACQUISITION SECTION**

POWER AMOUNT Q[mWh] 813

530

**PREDICTED TIME CALCULATION SECTION**

811

OUTPUT CURRENT Ig[mA]

812

BATTERY VOLTAGE Vb[V]

PREDICTED TIME Tg[s] 814

606

### CONTROL SECTION

610

**COMPARISON SECTION**

620

**CONTROL CYCLE TIMER**

TIMER VALUE Tc[s]

630

**POWER TRANSMISSION CONTROL SECTION**

640

**CHARGING COMPLETION DETERMINATION SECTION**

802

(320)

(330)

803

SWITCHING SIGNAL

651

CONTROL SIGNAL

660

804

(700)

## INTERNATIONAL SEARCH REPORT

International application No.

PCT/JP2012/053278

### A. CLASSIFICATION OF SUBJECT MATTER
*H02J7/35*(2006.01)i, *H01M10/44*(2006.01)i

According to International Patent Classification (IPC) or to both national classification and IPC

### B. FIELDS SEARCHED

Minimum documentation searched (classification system followed by classification symbols)
H02J7/35, H01M10/44

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>A | JP 2010-268640 A  (Toyota Motor Corp.),<br>25 November 2010 (25.11.2010),<br>claims; all drawings<br>(Family: none) | 1-4,7-9,13<br>5,6,10-12 |
| A | JP 2010-268576 A  (Toyota Motor Corp.),<br>25 November 2010 (25.11.2010),<br>entire text; all drawings<br>(Family: none) | 1-13 |
| A | JP 10-336916 A  (Kyocera Corp.),<br>18 December 1998 (18.12.1998),<br>entire text; all drawings<br>(Family: none) | 1-13 |

[X] Further documents are listed in the continuation of Box C.     [ ] See patent family annex.

| | |
|---|---|
| *  Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| | |
|---|---|
| Date of the actual completion of the international search<br>17 April, 2012 (17.04.12) | Date of mailing of the international search report<br>01 May, 2012 (01.05.12) |
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2012/053278

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2011-36043 A  (Kabushiki Kaisha Asuko), 17 February 2011 (17.02.2011), entire text; all drawings (Family: none) | 1-13 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11113189 A